Europäisches Patentamt

European Patent Office

Office européen des brevets

(11) Publication number: **0 145 476**
A2

# (12) EUROPEAN PATENT APPLICATION

(21) Application number: **84308579.6**

(22) Date of filing: **10.12.84**

(51) Int. Cl.⁴: **G 06 K 13/073**, G 06 K 7/08

(30) Priority: **08.12.83 IE 2878/83**

(43) Date of publication of application: **19.06.85 Bulletin 85/25**

(84) Designated Contracting States: **AT BE CH DE FR GB IT LI LU NL SE**

(71) Applicant: **CORAS IOMPAIR EIREANN, Heuston Station, Dublin 7 (IE)**

(72) Inventor: **Williams, Joseph Edward, 16 Corbawn Close, Shankill Dublin (IE)**

(74) Representative: **Leale, Robin George et al, FRANK B. DEHN & CO. Imperial House 15-19 Kingsway, London WC2B 6UZ (GB)**

(54) **Ticket handling apparatus.**

(57) In ticket handling apparatus for a ticket validation mechanism or a ticket issuing machine, a generally rectangular card ticket is moved between an input station (25) and an output station (29) by a transport carriage (1) driven along slideway guides (3) by an air motor (6). A drive face (5) on the carriage (1) engages the transverse rear edge of the ticket to impel it forwards, while one of the planar faces of the ticket rests against a planar surface (18) of the carriage (1). A fixed planar surface of the apparatus defined by the outer face of the web of a channel (14) constrains the opposite planar face of the ticket from displacement out of its plane of advance from the input station (25) to the output station (29). Magnetic heads (31, 35) are resiliently urged into engagement with magnetic material of the ticket on its opposite side from that resting against the carriage (1) during its transit between the input (25) and output (29) stations.

"Ticket Handling Apparatus"

This invention relates to ticket handling apparatus and in particular to ticket handling apparatus comprising transport means for moving a ticket from a ticket input station of the apparatus to a ticket output station and data transfer means for transferring information to and/or from a ticket, for example, a magnetically codable ticket, at least during movement of the ticket between the input and output stations.

In known apparatus of this kind, belt drive is frequently employed for carrying the ticket between the input and output stations. The ticket is gripped on its opposite planar faces between opposed belts which must be interrupted from time to time to accommodate ticket reading and/or printing and coding devices. Slippage of the tickets relative to the belts may occur, in particular where the tickets are carried across magnetic heads for reading data from or coding data onto a magnetic stripe or coating or other area of magnetic material on the ticket. The head loading in particular may induce a retardation of the ticket movement tending to encourage slipping. Because of this slippage or associated with it, wobble or lateral displacement or slewing of the ticket may occur, so that the discrete portions of information or bytes coded on the ticket may not be properly read, by virtue in particular of the magnetic stripe or coded area not moving past the head in a uniformly linear manner. A similar problem may arise in coding a ticket being issued. Twisting or other lateral displacement or skewing of a ticket may lead to cross-coupling of part of one portion of information with part of the information from a following or preceding coded magnetic region, so that there is cross-reading or coding and possible interpretation of valid tickets as defective or incorrect coding of tickets undergoing issue. Belt-drive machines are in addition costly to provide and service and difficulties have been experienced in adapting for them use for multi-journey tickets without recourse to the complex alternative of stored-fare tickets of plastics material.

It is an object of the present invention to provide ticket handling apparatus which will facilitate the controlled advance of a ticket without the ticket experiencing the slipping or lateral displacement problems encountered in at least some types of currently-employed ticket handling apparatus. It is a further object of the invention to provide ticket handling apparatus which will be suitable for dealing with multi-journey tickets of card material.

According to a first aspect of the invention there is provided ticket handling apparatus comprising ticket transport means for moving a ticket from a ticket input station of the apparatus to a ticket output station, the ticket being restrained during movement between the input and output stations against displacement in a direction substantially perpendicular to its own path of movement between said stations, and data transfer means located between the input and output stations for transferring information to and/or from a ticket during movement of the ticket between the input and output stations, characterised in that the ticket transport means includes a ticket drive member having a drive face for engaging an edge portion of a ticket defined between opposed substantially planar surfaces of the ticket, the drive face being substantially transverse to the direction of movement of tickets between the input and output stations.

The path of movement of a ticket from the input station to the output station typically extends in a direction defined at least initially by the plane occupied by the ticket at the input station and generally follows an elongate dimension of the ticket, as opposed to its thickness, at every point along the path. The drive face may be substantially planar or it may be a curved surface portion of the drive member. Said edge portion of the ticket may be part of the outer peripheral edge of the ticket or an edge region of an aperture through the ticket, inboard of its outer peripheral edges and extending between the opposed planar surfaces of the ticket, so that it may be a substantially linear edge portion of the ticket or a curved edge portion.

In a preferred embodiment of the apparatus of the invention, the drive face is defined by a portion of the ticket drive member extending substantially transverse to the direction of ticket advance from the input station to the output station so that it may abuttingly engage at least a portion of the rear edge of a substantially rectangular ticket. Means may be provided for guiding a lateral edge of the ticket during ticket advance to inhibit lateral displacement or slewing of the ticket, but in a particularly preferred arrangement, the drive member engages the rear edge of the ticket over at least a major part of the rear edge, so that control of the direction of advance of the lateral edge of the ticket is substantially fully achieved solely by the engagement of the drive face against the rear edge, and thus there is no necessity to provide lateral edge guide means. However in an alternative embodiment, in which the drive face engages the edge region of an aperture through the ticket, provision of guide means for a lateral edge is generally necessary.

By virtue of the edge engagement of the drive face of the drive member against the ticket, as opposed to the gripping of opposed planar faces of the ticket between belts, a positively controlled passage of the magnetic material of the ticket past magnetic reading or coding heads is achieved, this feature of the invention being referred to herein as "controlled magnetics". In the first arrangement referred to above, this positively controlled advance is attained by displacement of the ticket past the heads being brought about by the action of the drive member on the transverse rear edge of the ticket. This rear edge is substantially at right angles to the lateral edges of the ticket, which will generally be the longitudinal edges of the rectangular ticket, and is also at right angles to any magnetic stripe provided on the face of the ticket. Where the drive member engages the ticket over at least a major part of its rear edge, this abutting engagement then also controls the direction of advance of the lateral edges of the ticket, and the occurrence of twisting or skewing of the ticket during travel of the ticket through the apparatus is also inhibited by the abutment of the drive member against the rear edge so that the lateral edges of the ticket and the magnetic stripe pass through in a substantially linear manner. This control of ticket disposition is achieved indirectly in that the position of the lateral edges of the ticket is regulated by the abutting engagement of the drive face of the drive member against a transverse edge of the ticket substantially at right angles to the lateral edges.

In the second arrangement referred to above, the drive face may be defined by a curved surface portion of the drive member and a lateral edge of each ticket may be guided during ticket advance from the input station to the output station to inhibit lateral or sidewise displacement of the ticket within its own plane during said ticket advance. The drive member may be a pin having an axis extending substantially at right angles to the path of movement of a ticket during transport through the apparatus and said drive face is then defined by a curved surface portion of the periphery of said pin. The edge engagement of a ticket drive member such as a pin in a hole of the ticket is then combined with the provision of means for guiding a lateral edge of the ticket during ticket advance to achieve the "controlled magnetics" feature of linear advance of the magnetic stripe past the magnetic heads of the apparatus. The guide means provides a direct constraint against rotation or slewing of the ticket by direct physical engagement of a lateral edge. This physical constraint may be achieved in a particularly effective manner by said guiding means being defined by a plurality of guide rollers defining a notional plane or surface over which the lateral edge of each ticket is displaced or moves during advance through the apparatus.

Where the drive member is a pin, the aperture in the ticket may be a circular hole through the ticket of slightly larger diameter than the diameter of the pin. Accordingly engagement of the curved surface portion of the pin against the aperture edge portion takes place initially by line contact between the curved drive member and aperture portions and a slight deformation of the ticket material in the region of this initial line contact may then take place as ticket travel movement commences so that the curved surface portion of the drive member defining the drive face abuts substantially fully against this edge portion of the aperture during the subsequent advance of the ticket.

In a particular construction of the first-mentioned arrangement, the transverse drive member may have a cut-out portion, defining an interruption in the drive face, to clear a magnetic head or other data transfer means for engaging a magnetic strip or other codable material portion on the ticket during advance of the ticket from the input station to the output station. Where a magnetic head is in use, it is generally necessary for the head to physically contact the strip in order to achieve the desired coding or reading effect.

The drive member is most suitably mounted on or associated with a carriage translationally displaceable between the ticket input and output stations. The carriage preferably has a planar surface against which one planar face of a ticket is juxtaposed during advance of the ticket and the restraint against ticket displacement in a direction substantially perpendicular to its own path of movement between the input and output stations is provided by said planar face of the carriage and an opposing fixed face of the apparatus, each ticket being located between said opposed faces during advance from the input station to the output station. The carriage is guided by means such as guide bars or rails and is associated with suitable motor means. The motor means may be an electric drive, for example a solenoid motor, or preferably the ticket transport means includes an air motor for displacing the ticket drive member or carriage between the input and output stations. The air motor may be a piston and cylinder device or in a particularly preferred embodiment, a roller motor or fluid pressure power actuator of the type described in British Patent Specification No. 1,358,361. In this arrangement, a pair of rollers fixedly associated with the carriage pinches the wall of a tube of flexible material to define respective compartments to each side of the pinch gap. Pressurisation of one or other of these compartments causes the carriage to be driven in a direction away from the particular compartment pressurised.

The use of an air drive gives a particularly desirable pattern of motion, in which accelerative and decelerative effects are minimised, and the constant speed portion of the travel of the carriage is maximised. This allows a high density of coding to be employed on the ticket.

The handling apparatus of the invention may be applied to devices such as validators or cancellers. In this case a ticket is inserted at the input station and is conveyed past data transfer means such as magnetic heads to the output station. If a ticket is valid, as read by the magnetic heads, a suitable indication of this may be printed on it, or operation of associated apparatus may be brought about by suitable control means. Stop means are provided at the input station to limit the extent to which a ticket can be inserted at that station and to align the ticket for pick-up by the drive member in a disposition in which it may be conveyed in the required manner to the output station.

In equipment of this kind ticket return means is provided at the output station. Where a rectangular ticket is used, the return means may tilt the ticket through approximately 90° from its travel disposition, to cause at least a portion of an edge region of the ticket to project through a slot for recovery by the user. The return mechanism may also serve to "swallow" a one-trip or expired ticket. It may also be arranged to either return or swallow a ticket as appropriate.

The disposition of the ticket during traverse of the canceller or validator may be either vertical or horizontal. However the possible orientations are not limited to these two extremes and a diagonally disposed ticket may equally well be handled. In the particularly preferred arrangement of the apparatus of the invention, the driving of the ticket by abutting engagement of a drive member against its transverse rear edge causes the

0145476

-8-

ticket to be advanced while substantially avoiding lateral displacement of the ticket within the plane defined by the ticket. The planar face of the carriage provides restraint against ticket displacement in a direction perpendicular to that plane, and the apparatus is most suitably also provided with an opposing face, to prevent similar displacement of the ticket away from the planar face of the carriage. This restraint may be provided by the outer face of the web of a channel member, through apertures in which the magnetic heads project to engage the magnetic material on the ticket. Each magnetic head is spaced by a distance exceeding the length of the ticket from each adjacent head so that only one head operates on a ticket at any given time.

The method of advance of the ticket employed in the preferred apparatus of the invention eliminates the slippage problems entailed in apparatus in which the tickets are advanced by engagement between opposed pairs of driving belts. The absence of slip means that the passage of the tickets past the magnetic heads takes place at a particularly uniform and controlled speed. Where ticket advance is brought about by an air motor, an enhanced density of coding may be provided. Minor variations in the speed of travel between individual tickets may also be allowed for in the control system of the apparatus, so that the system may compensate for the time intervals between the pick-up of discrete portions of information differing from ticket to ticket. In this way it is possible to avoid the situation where the control system misreads a particular piece of coded information and interprets it as another such piece of information.

These features of the invention render it especially suitable for card tickets and in particular for multi-journey card tickets. A ticket may be coded to provide a particular number of journeys, suitably ten, and on each passage of the ticket through a validator or barrier incorporating the apparatus of the present invention, the status of the ticket may be reliably checked and the user provided with another journey or not, depending on whether his ticket remains eligible or not. As each journey is made, the apparatus recodes the ticket or rewrites it appropriately so that the number of journeys remaining available is suitably decremented. For user convenience, a corresponding entry in visual form is preferably made simultaneously on one of the faces of the ticket.

According to a second aspect, the present invention provides ticket handling apparatus comprising ticket transport means for moving a ticket from a ticket input station of the apparatus to a ticket output station, the ticket being restrained during movement between the input and output stations against displacement in a direction substantially perpendicular to its own path of movement between said stations, and data transfer means located between the input and output stations for transferring information to and/or from a ticket during movement of the ticket between the input and output stations, the data transfer means including at least one magnetic head for encoding data onto a region of magnetic material of the ticket and/or reading data previously coded onto said region, characterised in that the or each said magnetic head is resiliently urged into data transfer relationship with the magnetic material of the ticket during movement of a ticket past said head.

This feature of urging the magnetic heads towards the ticket surface and into a data transfer relationship with the magnetic material has been found to be of particular importance in the successful and reliable coding and/or reading of tickets incorporating or provided with magnetic material. Tickets for public transport vehicles in particular are frequently crumpled or otherwise abused between their time of issue and their subsequent insertion into ticket handling apparatus such as validators or cancellers. The longer the time between the issue and insertion or the more often the ticket is required to be inserted, such as may be the case with a multi-ride ticket, the more likely it is that crumpling or abuse will result in a failed cancelling or validating operation, leading to irritation for the user and inconvenience and expense for the operator.

The data transfer relationship between a magnetic head and the magnetic material of the ticket is generally achieved by a light physical pressure of the head against the surface of the region of magnetic material on the ticket, typically a magnetic stripe. This pressure may amount to approximately 200 grammes. Such urging of a magnetic head against for example a magnetic stripe on a ticket has been found to allow the head to ride over any undulations or distortions in the ticket, while still successfully accomplishing its data transfer function, whether reading or encoding.

In a preferred embodiment, the or each magnetic head is resiliently displaceable into said data transfer relationship in a direction substantially perpendicular to the general path of movement of the ticket between the input and output stations. The urging means is preferably a spring and in one construction of the invention, the or each head is mounted on a pivotable lever arm and the spring acts on said arm to displace it towards a position in which the head is urged against the surface of a region of magnetic material, for example a longitudinal stripe extending lengthwise along the ticket in its direction of advance through the ticket handling apparatus.

In such a construction, the spring may be located between the head and the pivot axis of the arm. Alternatively the spring may act against the lever arm outboard of the head relative to the pivot point. The spring may be a compression spring or a tension spring. In a particularly preferred arrangement, the spring may be a coil or torsional spring acting about the axis of pivoting of the lever arm to rotate it towards a configuration in which the magnetic head is in a data transfer relationship with the magnetic material. More complex linkages are also possible for guiding and urging the head against the magnetic material. An air or hydraulic urging means or an air or hydraulic spring may also be employed as a further option, either in association with a lever arm or alone.

In an alternative arrangement, the magnetic head may be mounted on a pad or block of resilient material such as rubber. The rubber block or pad may itself also be urgeable in the direction of the magnetic material, for example by being mounted on a spring-biassed lever arm. In yet another construction, a magnetic head may be mounted on a plate movable in translation in a direction substantially perpendicular to the plane of the plate and guided during this movement by two or more substantially parallel pillars or guide rods, so that in each position during its translational movement, the plate is substantially parallel to its disposition in every other position during said movement.

In a particularly favoured construction of the ticket handling apparatus according to this aspect of the present invention, the or each magnetic head enters into data transfer relationship with the magnetic material from one side only of the general path of movement of the ticket between the input and output stations and the apparatus includes means defining a substantially planar surface against which the face of the ticket to the other side of its general path of movement is juxtaposed during advance of the ticket between the input and output stations of the apparatus.

This substantially planar surface is preferably defined by a face of a ticket support member of the ticket apparatus translationally displaceable with the ticket during displacement of the ticket between the input and output stations of the apparatus and associated with a ticket drive member according to the first aspect of the invention. The ticket support member may be guided during its translational displacement by means such as guide bars or guide rails. The guide bars or rails may be two or more parallel elongate guide members of circular cross-section, the ticket support member having suitable corresponding means such as bushed apertures for slidingly receiving these guide members, so that the ticket support member may be displaced along said guides while being constrained by them to move in a linear manner. In an alternative arrangement, the ticket support member may be slidingly displaceable along opposed guide surfaces of planar or dovetail configuration, i.e. in similar manner to the guidance provided by the slideways of a machine tool such as a lathe. In a particularly preferred construction, the planar ticket support surface is defined by a face of a translationally displaceable carriage of the apparatus, on which the drive member is also mounted. The ticket drive member preferably has a drive face for engaging an edge portion of the ticket defined between opposed sustantially planar surfaces of the ticket, said drive face being substantially transverse to the direction of movement of tickets between the input and output stations.

This support of the face of the ticket opposite to that from which the magnetic heads are urged into data transfer relationship with the ticket during transport of a ticket between the input and output stations has been found to be of further benefit in ensuring reliable reading and/or coding of crumpled tickets, in particular crumpled or similarly damaged multi-ride tickets.

In a particular construction of ticket handling apparatus according to the invention said first and second aspects may be combined.

In another aspect, the invention provides ticket handling apparatus for a ticket validation mechanism, comprising:
- means defining a ticket reception region and adapted to co-operate with an associated ticket entry means to receive a ticket presented at the ticket entry means for validation;
- means defining a ticket return region from which a ticket can be directed outwardly of the mechanism for retrieval by a user or directed to a disposal area within associated apparatus;
- ticket transport means for moving a ticket from the reception region to the return region comprising a drive member having a drive face, at least a part of which extends substantially transverse to the direction of movement of tickets from the reception region to the return region, for engaging an edge portion of the ticket defined between and substantially transverse to the opposed substantially planar faces of the ticket;
- ticket reading means for reading pre-recorded data borne by a ticket, during movement of the ticket from said reception region to said return region, and optionally, ticket coding means for rewriting data on a said ticket and verifying said data, also during a said movement of the ticket but subsequent to the reading of the prerecorded data; and
- control means for detecting the presence of a ticket in said reception region and for activating said transport means to move said ticket from the reception region to the return region, wherein the means defining the ticket reception region is adapted to receive a ticket in a vertical disposition, and means are provided for guiding a lateral edge of a vertically disposed ticket at least in the ticket reception region. Preferably said means is adapted to support a lower edge of the ticket in the reception region and is further adapted to guide and/or support a ticket during movement of the ticket from the ticket reception region to the return region. In a particular embodiment of the mechanism according to this aspect of the invention, the support means comprises a plurality of rollers. The term "vertically disposed", as used herein in connection with tickets, refers to the plane of the ticket being substantially vertical.

In a preferred embodiment, the mechanism comprises two plate members which are disposed in substantially parallel planes. The faces of the members directed towards each other are profiled to define a passage through which a ticket can pass. The plate members may suitably be secured together substantially face-to-face. The guide or support means, e.g. the rollers, are preferably disposed in the lower part of the passage. The passage is suitably substantially rectangular in transverse section. In a particular construction, the rollers are carried in a substantially friction-free manner on pins, the ends of which are supported in the plate members. The expression "friction-free", as used herein, is a term of art implying a low level of frictional resistance to motion.

Preferably, each plate member is a moulding of plastics material, and may also incorporate magnetic heads moulded in situ during the manufacture of the members. Preferably also, the two plate members together defining the passage are identical, but in an alternative construction, they may be mirror images of each other.

In a particularly preferred embodiment, the transport means comprises a pick-up pin driveable between the reception region and the return region and adapted to engage a hole in a ticket received in the reception region for conveying a ticket thus engaged from the reception region to the return region. The pick-up pin is most suitably spring-biassed so that it is urged in a direction to engage a said hole in a ticket, but can be moved aside against the spring bias during an initial insertion movement of a ticket into the reception region. During the movement of the pick-up pin to convey a ticket from the reception region to the return region, the pin may be guided by a longitudinal slot in one of the plate members, extending in the direction of movement of the ticket. In a preferred construction, pneumatic drive means are provided for the pick-up pin, suitably consisting of a pneumatic cylinder and ram.

Preferably, the validation mechanism according to this aspect of the invention includes a blocking pin selectively movable into said passage in the return region of the mechanism to abut the front edge of a ticket entering the return region at a location on the edge displaced from the longitudinal centre line of the ticket, and the guide slot for the pick-up pin includes a portion extending in a direction such that the ticket is pivoted about said blocking pin during a latter phase of the ticket-conveying movement of the pick-up pin, subsequent to abutment of the ticket against the blocking pin. In a preferred construction the said guide slot portion extends upwardly and the rear end of the ticket is brought upwards to a slot or like means from which it can be retrieved, during said latter phase of the pick-up pin movement.

Preferably the magnetic heads are arranged to contact at least one outer surface of the ticket so that they can read or write on a magnetic material portion on the ticket.

In a preferred embodiment of the ticket validation mechanism, means such as springs are provided to urge the magnetic heads towards the ticket surfaces, and suitably, heads are provided on each side of the passage. Where the heads contact the actual magnetic material, a greater saturation of the magnetic flux in the material is possible, and thus a greater reliability in the accuracy of the coded information. A suitable arrangement of the heads and associated equipment will also allow the mechanism to accept a ticket in any of four orientations.

The mechanism according to this aspect of the invention may be included in a ticket barrier and according to a further aspect of the invention, there is provided a ticket barrier comprising a ticket validation mechanism as herein disclosed. The mechanism may also find application in ticket vending machines and in other equipment where the reading and/or encoding of information on a card resembling a ticket may be required. Thus the term "ticket" as used herein is to be understood as embracing a wider concept than passenger control in transport, although this latter represents an important and principal field of application of the mechanism according to the invention.

The handling apparatus of the invention may also be applied to a ticket vending or ticket-issuing machine, issuing individual tickets from a stack of tickets held in the machine. According to this aspect of the invention, a stack of tickets is accommodated in the apparatus, the leading ticket of a said stack being located at the input station of the ticket handling apparatus, and the apparatus also includes a stack retaining carriage translationally displaceable between a restraining position in which it prevents the leading ticket of a said stack from being removed from the input station and a clear position in which said leading ticket may be removed from the input station. Accordingly the stack of tickets is held in position between operations of the machine by the stack retainer carriage located at the input station. Preferably the stack retaining carriage is displaced into its clear position by movement of the ticket support carriage into the input station and the apparatus also includes means for urging the stack retaining carriage back into its restraining position when the ticket support carriage moves away from the input station towards the output station. The ticket transport or transfer carriage then displaces the stack retainer carriage when it moves to the input station, to align itself with the end of the ticket stack. The leading ticket of the stack abuts the planar face of the ticket transport carriage and, where it is a rectangular ticket, its transverse rear edge is engaged by the drive face of the drive member of the carriage on return movement of the transport carriage from the input station to the output station of the apparatus to advance the ticket to the output station. Driven rollers may be provided at the output station to then advance the ticket further from the output station to an exit point of the apparatus. A recessed region may be provided in the ticket-receiving planar face of the transport carriage, the depth of the recess being less than the thickness of the ticket. This recess provides a degree of lateral constraint on the ticket to prevent jamming during removal of a ticket from a stack.

Preferably spring means such as an air spring resist displacement of the stack retainer carriage from its stack restraining position, and urge it back into this position when allowed to do so by return of the transport carriage towards the output station. The stack retainer carriage then abuts a stop, under the urging of the spring, in this position. However, to ensure that the retainer carriage is returned to the stack retaining position when the transport carriage begins its return movement, means are most suitably provided for coupling the two carriages together during the displacement of the stack retaining carriage by the transport carriage and the return movement of the transport carriage away from the end of the stack. This coupling means serves to draw the stack restraining carriage back into its stack retaining position and means are provided for automatically disconnecting the coupling means, substantially when the stack restraining carriage abuts its stop. The uncoupling means may consist of inter-engaging cam surfaces for disconnecting a hook member of the transport carriage from a pin on the restraining carriage.

Bias means are provided for urging the stack of tickets towards the input station of the apparatus. This means is most conveniently also an air spring. Printing means may be incorporated in the ticket stack restraining carriage, suitably for activation by cam means on the transport carriage. The cam means may be arranged to activate the printing means during return movement of the transport carriage from the ticket stack towards the output station of the apparatus, so that the next ticket which will be removed from the stack is printed at this time, while the previous ticket is in the course of its transfer from the input station to the output station, during which movement it is coded magnetically with data as appropriate and as directed by the apparatus control means. This embodiment is again especially suitable for the issue and coding of ten-journey card tickets and may be provided with a pair of spaced apart heads, the contact pressure of which is adjustable, located on the path of ticket travel between the input and output stations.

This invention may also be applied to ticket issuing apparatus in which ticket information is transferred to a portion of web material detached from a length of such material substantially at the time of issue of the ticket and the web portion is transported to an output station of the apparatus for delivery to or collection by a purchaser. The transfer of ticket information to the ticket may comprise printing said information on the surface of the web portion and/or encoding said information on a suitably receptive region of the web portion, for example, a region comprising or provided with magnetic material. Such apparatus is intended in particular, though not exclusively, for the issue of tickets in connection with public transport operations and may be incorporated in free-standing automatic vending units or in operator-controlled ticket issuing units, for example desk-top units.

According to this aspect of the invention there is provided ticket issuing apparatus comprising means for advancing a leading end portion of a length of web material to a ticket registration station defining the input station of the apparatus so that a predetermined length of the leading end portion of the web material, substantially defining a ticket, is disposed at the ticket registration station, and means for detaching the ticket-defining predetermined length at the registration station from the remainder of the web, the ticket transport means being disposed when at the registration station to receive the leading end portion of web material advanced to the station and being provided with means for holding a ticket-defining predetermined web material length on the transport means at least at the registration station.

In a preferred embodiment, the ticket transport means includes a carriage slideably mounted on rails extending longitudinally substantially in the direction of advance of the web material into the registration station. The rails are suitably of circular cross-section. The pneumatic drive means may comprise a pneumatic ram, which is preferably coupled to the carriage for displacement of the carriage along the rails from the registration station to the ticket output station by means of a cable and pulley arrangement, the cable being secured at one end to the carriage and at its other end to a fixed frame member of the apparatus and passing between its ends over a pulley mounted on the ram to give a multiplication of the stroke of the ram so that a displacement of the piston of the ram through a given distance causes the carriage to be displaced by twice that distance. Either the piston or the cylinder of the pneumatic ram may be secured to a fixed frame member of the apparatus, but preferably the cylinder is so secured. In this case the piston of the ram is displaceable and the pulley for the cable is rotatably mounted on it, or on a piston rod extending from the piston.

The cable and pulley arrangement for coupling the pneumatic ram to the carriage may operate only for advance of the carriage from the registration station of the apparatus to the output station and return movement of the carriage may be achieved by other means. For example the carriage may be urged by suitable resilient or spring means towards the registration station, this means being overcome by the pneumatic drive means to displace the carriage from the registration station towards and to the ticket output station. On completion of the forward stroke of the ram and release of pressurised air from the cylinder of the ram, the resilient or spring means again becomes dominant and urges the carriage back towards and into its position at the registration station.

The slideably mounted carriage most suitably has a substantially planar upper surface region for receiving the ticket-defining leading end portion of web material advanced to the registration station and may have lateral guide members for engaging the longitudinal edge regions of said leading end web portion. The guide members where provided preferably define respective inwardly directed longitudinal grooves extending along opposed longitudinal side regions of the substantially planar upper surface region of the carriage.

In order to ensure accurate registration of the leading end region of a length of web material at the registration station, the carriage may be provided with a web stop against which the front edge of the leading end region of the web abuts when the predetermined ticket-defining length of the web is located at the registration station. The web stop is then displaceable between a blocking position, in which it is positioned to abut or engage the front edge of the web, and a free position, in which the ticket may be further advanced past the stop. A spring may be provided to urge the web stop towards the blocking position. The web stop may be mounted on a lever, which can be pivoted to move the stop between its blocking and free positions, for example by abutment of an abutment face of the lever against a fixed abutment face which may, in one arrangement, be provided on a fixed abutment member of the apparatus located towards the end of the path of movement of the carriage from the registration station to the ticket output station, to move the stop to its free position.

Preferably however, web advance is terminated by suitable detector means, such as interruption of a light beam, and severance of the ticket from the remainder of the web is co-ordinated with a roller drive for advancing the ticket a short distance over the face of the carriage following separation from the web roll until its rear edge either engages or is positioned for engagement with the drive face of a drive member disposed transverse to the said rear edge. The drive member may be arranged to be displaced in phase with the movement of the severing means across the plane of the ticket from a position in which the upper edge of the drive face is disposed in alignment with or below the level of the ticket-receiving surface of the carriage. The ticket when thus advanced on the carriage may come up against a stop of the type already described at the leading end of the carriage, so that it is received between a stop forward of it and the rearwardly-disposed drive face of the drive member during advance by the apparatus.

In an alternative arrangement, a pin-type drive member may engage a hole provided either in the web stock or punched at the time of severance and lateral guidance may be ensured by the lateral guide arrangements already described or by reception of the ticket in a recessed area of the ticket-receiving surface of the carriage.

Accordingly in operation of the apparatus according to this aspect of the invention in a preferred embodiment, the web material is advanced into the registration station, where its front edge may abut a web stop or web advance is terminated by a suitable detector. A predetermined web length is accommodated in the registration station to define a ticket. This length is then separated from the remainder of the web and accommodated on the carriage of the transport means during the further operation of the apparatus. When the carriage arrives at the ticket output station of the apparatus, the web stop where provided may be displaced into its free position by abutment of a web stop lever abutment face against a fixed web stop abutment face of the apparatus so that the lever pivots and the stop moves out of its blocking position. A ticket at the output station is then advanced from the carriage as required for transfer to the purchaser or to other apparatus as the case may be.

In a preferred embodiment, the information-transferring means of the apparatus according to this aspect of the invention includes at least one transducer for transferring data in electronically coded form to and/or from a suitably receptive region of the web material portion defining the ticket, for example a region comprising or provided with, magnetic material. The apparatus may have three such transducers, arranged in sequential order to transfer such data during displacement of the ticket transport means from the registration station to the ticket output station, the first transducer head erasing any data previously recorded on the magnetic material of the ticket, the second transducer head coding the magnetic material with the information required to describe all the necessary characteristics of the ticket being issued by the apparatus, and the third head reading the coded information to check that the ticket has been correctly coded for issue. The apparatus may also include electronic means such as a microprocessor programmed to compare the check coding read-off by the third head against the information which should have been encoded on the ticket by the second transducer head. The information-transferring means of the apparatus also preferably comprises means such as needle printers for printing on the web surface of the ticket such information as may be required by the user, and for inspection and checking purposes by revenue protection staff.

For economy however, the initial erasing head may be replaced by a permanent magnet which serves to remove any stray codings on the initial web stock, while the check head may be dispensed with in many instances, since the reliability of coding is nowadays generally such that it is usually acceptable to tolerate the very small number of tickets incorrectly coded rather than check all tickets in order to detect the infrequently encountered "bad" ticket.

This preferred embodiment also includes further information-transferring means comprising printing means having at least one printing character formed from ink-retentive material, which is contactable with a predetermined ticket-defining web length at the registration station to print information thereon. Most suitably this printing means includes a printing block of ink-retentive material, which is urged against the ticket at the registration station by a pneumatic piston and cylinder device to apply to the ticket fixed information to be visibly displayed on each ticket, while variable information which differs from ticket to ticket is applied to the ticket in encoded form by the transducers and in visible form by the needle printers. It will be appreciated that in special circumstances, the apparatus may be employed to produce tickets having fixed information only, while it would also be possible to produce tickets having coded data only, with no information being shown in visually legible form on the web surface. By printing the fixed information on each ticket at the time of issue, the apparatus of this aspect of the invention may make use of blank paper or card stock, preferably in roll form.

Each ticket formed by a ticket-defining predetermined web material length at the registration station is preferably detached from the remainder of the web by severing it from the web at a location immediately upstream of the registration station, considered with regard to the direction of advance of the web. The detaching means may then comprise a rotatably mounted circular knife having a peripheral cutting edge, and drive means for the knife, for example in the form of an electric motor. The preferred arrangement of this severing means also provides for transverse movement of the motor driven knife across the path of advance of the web, and this is most suitably achieved by mounting both knife and drive motor on a pivotable frame member which can be pivoted in a plane or direction substantially transverse to the direction of advance of the web by pneumatic means such as a piston and cylinder mechanism. The length of web retained at the registration station is accurately controlled by electronically driven motor control means activated by a web leading edge detector or by the abutment of the leading edge of the web against a web stop. Since the cutting edge of the rotating knife blade traverses across the path of the web along the same path for each cutting operation, successive tickets produced by the apparatus will be consistent in length. The edge of the knife may move in close juxtaposition to a transverse stop member against which the upstream end of the transport means abuts when it is at the registration station.

In a preferred arrangement of the apparatus according to this aspect of the invention, the web is advanced to the registration station by means of a pair of pinch rollers, at least one of which is drivable in rotation by means such as an electric motor. Further rollers may also be provided for straightening a web coming from roll stock, at least one of the further rollers being displaceable in a direction substantially perpendicular to the plane of the advancing web so that the degree of straightening force applied to the web can be adjusted by movement of this roller towards or away from the path of the web.

Ticket drive means may also be provided at the output station of the apparatus, again in the form of a rotatably mounted pinch roller driven by an electric motor, to advance a ticket from the carriage of the transport means to an output slot or other transfer location. In operation of the apparatus, the original ticket-defining predetermined web material length has at this stage been printed and coded and constitutes a finished ticket, and is driven forward by the pinch roller past a web stop, which where provided, will have moved to its free position to permit passage of the ticket when the ticket transport means reaches the output station. Displacement of the web stop where provided, may be achieved by abutment of a lever on which it is mounted against the activating fixed web stop abutment face of the apparatus towards the end of the registration station to output station movement of the carriage, while drive of the roller may be initiated by suitable control means. Alternatively the drive roller may run

0145476

-26-

continuously, advancing any tickets presented to it to the output slot. The carriage of the ticket transport means may be provided with a roller or rollers and the ticket may be gripped between this or these and the drivable pinch roller of the output station. A further drive roller or drive rollers may be provided downstream of said pinch roller, to further advance a finished ticket from the apparatus.

The apparatus of this aspect of the invention preferably comprises electronic integrated circuit means and associated transducers, the integrated circuit means being programmed to activate the various means for carrying out the advancing, severing, printing, encoding and ticket transport operations in appropriate order and at appropriate times during an operational cycle in response to appropriate signals from the relevant transducer or transducers. The circuit means may also include or be associated with electronic data storage means for recording and collating inter alia the information printed and/or coded on each ticket produced and for transferring such data to display means or further data storage means. The integrated circuits and associated means may comprise commercially available units appropriately programmed and interconnected.

During such an operational cycle, the web is first of all advanced by driving the roller or rollers of the advancing means until the leading edge of the front end region of the web triggers a detector device to shut off web drive or the edge abuts a web stop at the registration station, in which case further detection means in the form of a suitable transducer then shuts off web drive as paper advance is stopped. The detaching or severing means then comes into action to detach the ticket from the remainder of the web. At the same time, the fixed information of the ticket is printed on the web length at the registration station by activation of the piston and cylinder device for urging the block of ink-retentive material against the ticket, this also holding the ticket in place during the cutting operation. Subsequent to this, the transport means is put into action to carry the ticket from the registration station to the output station. In a preferred embodiment this is achieved by a pneumatic ram connected to the carriage by a cable and pulley. At the output station, a web stop where provided is displaced by abutment of a web stop lever against a fixed web stop abutment member to allow release of the ticket, which is then driven forward by the pinch roller.

The ticket is advanced to the output station while accommodated on the planar upper face of the carriage by engagement of a suitable drive member against its rear edge as already described for earlier embodiments, or alternatively by engagement of a drive pin in a hole in the ticket.

Return of the carriage to the registration station is detected by a suitable transducer at this station for enabling a further operational cycle to be initiated as required. Further detecting means may be provided for ensuring that the carriage does not contain a ticket at this time and to guard against malfunction of the apparatus.

The apparatus of this aspect of the invention is particularly suitable for producing tickets of so-called credit card size from roll stock, and by virtue of the use of pneumatic drive means, the constant-speed portion of the distance travelled by the carriage between the registration and output stations constitutes a high proportion of the total distance travelled. Encoding of tickets is carried out during the constant-speed phase of carriage travel to ensure maximum reliability of coding, and this constant-speed phase may be of sufficient duration to permit the ticket to be coded twice, one of the encodings being carried out in reverse order, so that in use of the ticket in ticket checking or reading apparatus, the ticket can be inserted with either end leading. The apparatus may permit encoding densities of up to 200 bytes per inch to be achieved, so that the bi-directional encoding can be accommodated within the length of the ticket.

Embodiments of ticket handling apparatus according to the invention will now be described having regard to the accompanying drawings:-

Figure 1 is a schematic outline diagram of a ticket transport means for apparatus according to the invention;

Figure 2 is a schematic outline pictorial view of a first embodiment of ticket handling apparatus according to the invention for use in a ticket validator or a canceller;

Figure 3 is a top view of a practical construction of apparatus in accordance with the schematic construction of Figure 2;

Figure 4 is a front view of the apparatus of Figure 3, part of the ticket output region being in section substantially along the lines IV-IV of Figures 3 and 6 to show the ticket ejection arrangement;

Figure 5 is a sectional view of the apparatus of Figure 3 on the line V-V of Figure 3 but with the carriage moved into the ticket input region to show the ticket accommodating space in this disposition of the apparatus;

Figure 6 is a sectional view of the apparatus of Figure 3 on the line VI-VI of Figure 3;

Figure 7 is a sectional view of the serial number printing wheel of the apparatus of Figure 3, on the line VII-VII of Figure 3;

Figure 8 is a schematic outline diagram of a second embodiment of ticket handling apparatus according to the invention for use in a ticket vending or issuing machine;

Figure 9 is a pictorial schematic outline view of part of the handling apparatus of Figure 8;

Figure 10 is a front view of the ticket transport carriage and ticket output station of the handling apparatus of Figures 8 and 9, in part section on the line X-X of Figure 14;

Figure 11 is a front view of the ticket stack restraining carriage of the apparatus of Figure 10, in part section on the line XI-XI of Figure 14;

Figure 12 is an end view of the ticket output station of the apparatus of Figure 10, on the line XII-XII of Figure 10;

Figure 13 is a part sectional view of the air spring bias arrangement for the ticket stack;

Figure 14 is a view of the apparatus of Figure 10, on the lines XIV-XIV of Figures 10 and 11, showing the ticket transport carriage and the ticket stack restraining and print carriage;

Figure 15 is a view of the apparatus of Figure 10 on the line XV-XV of Figure 13;

Figure 16 is an exploded pictorial view of a ticket validation mechanism incorporating a further embodiment of ticket handling apparatus according to the invention, and also shows an associated ticket entry device;

-30-

Figure 17 is a side view of the validation mechanism shown in Figure 16;

Figure 18 is an end view in section of the mechanism of Figures 16 and 17, on the line XVIII-XVIII of Figure 17;

Figure 19 is a top view of the mechanism of Figures 16 to 18, with one of the plate members shown in section on the line XIX-XIX of Figure 18;

Figure 20 is a detail sectional view from above showing the leading end of the spring-loaded pick-up pin of the ticket transport means;

Figure 21 shows a form of ticket suitable for use with the embodiment of the invention described in regard to Figures 16 to 20, and also indicates the direction of the return movement of the ticket from the return region of the mechanism to an upwardly opening ticket retrieval slot;

Figure 22 is a schematic diagram of ticket-issuing equipment incorporating yet another embodiment of ticket handling apparatus according to the invention, in which the ticket supply is provided in roll form, each ticket being separated from the roll at the time of issue;

Figure 23 is a graphical representation of the relationship between speed and distance travelled or time elapsed for air-powered and electrically-driven ticket transport means;

Figures 24 to 29 show in schematic or diagrammatic form, various further arrangements for biassing a magnetic head into a data transfer relationship with a passing ticket in ticket handling apparatus according to the invention, and

Figures 30, 31 and 32 show a number of alternative arrangements for supporting the opposite side of the ticket from that engaged by a magnetic head urged against a magnetic stripe of the ticket during a data transfer operation in ticket handling apparatus according to the invention.

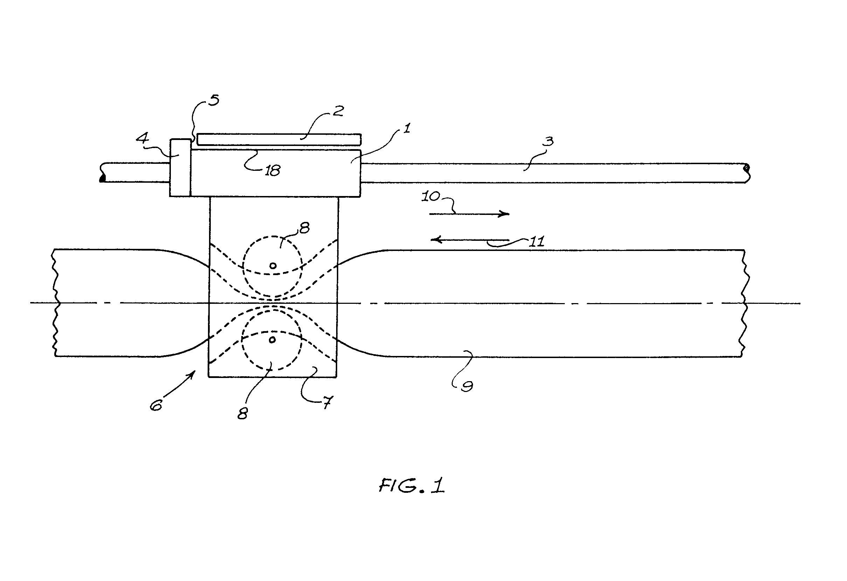

As shown in Figure 1, ticket transport means of ticket handling apparatus according to the invention includes a ticket transport carriage 1 having a planar face 18 against which a ticket 2 of credit card size is received. The dimensions of the ticket are approximately 85mm by 54mm and its thickness is typically about 0.50mm (0.020 inches). The carriage 1 is guided for reciprocating linear movement by two guide rails 3 to convey the ticket between stations of the apparatus, such as an input station and an output station. The guide rails are each of circular or cylindrical cross-section and the carriage 1 has bushed openings through it of corresponding cross-section, so that the carriage may move in a sliding and substantially friction free manner along the rails 3. The rails 3 are suitably 12mm (½ inch) in diameter. At the rear of the carriage 1, considered relative to the direction of ticket advance, a ticket drive member 4 is affixed to the carriage. This drive member 4 projects outwardly of the face 18 of the carriage 1 against which the ticket 2 is received, to the extent of approximately two thirds of the thickness of the ticket. Thus drive member projects above face 18 by approximately 0.33mm (0.013 inches). The drive member may be formed from steel or another metal or alternatively it may be of plastics material, for example nylon. The forward face of the projecting portion of the drive member 4 defines a ticket drive face 5, which engages the rear edge of the ticket 2 during advance of the ticket and extends substantially at right angles to the ticket receiving face 18 of carriage 1.

The carriage 1 is driven along the rails 3 by means of a roller motor 6. The motor 6 has a housing 7 which is attached to the carriage 1. A through opening in the housing 7 accommodates an opposed pair of rollers 8, between which a pinch gap is defined. A tube 9 of rubber or other suitable flexible material extending along the length of the handling apparatus parallel to the guide rails 3 also passes through the opening in the housing 7 of the roller motor and is pinched together in the gap between the rollers 8. This pinching together defines two separate compartments within the rubber tube 9, one of which is located to one side of the pinch rollers 8 and the other of which is located to the other side of the pinch rollers. The housing 7 and consequently the carriage 1 attached to it may be driven along the guide rails 3 by pressurising one or other of the compartments thus defined in the rubber tube 9 to a greater degree than the other compartment. When the left hand compartment as illustrated in Figure 1 is pressurised, the carriage 1 will travel in the direction of the arrow 10 to advance the ticket 2 from the position shown towards the right hand side of the Figure. When the right hand compartment is pressurised, the carriage 1 will be driven back in the direction of the arrow 11 towards its starting position at the left hand side of the Figure.

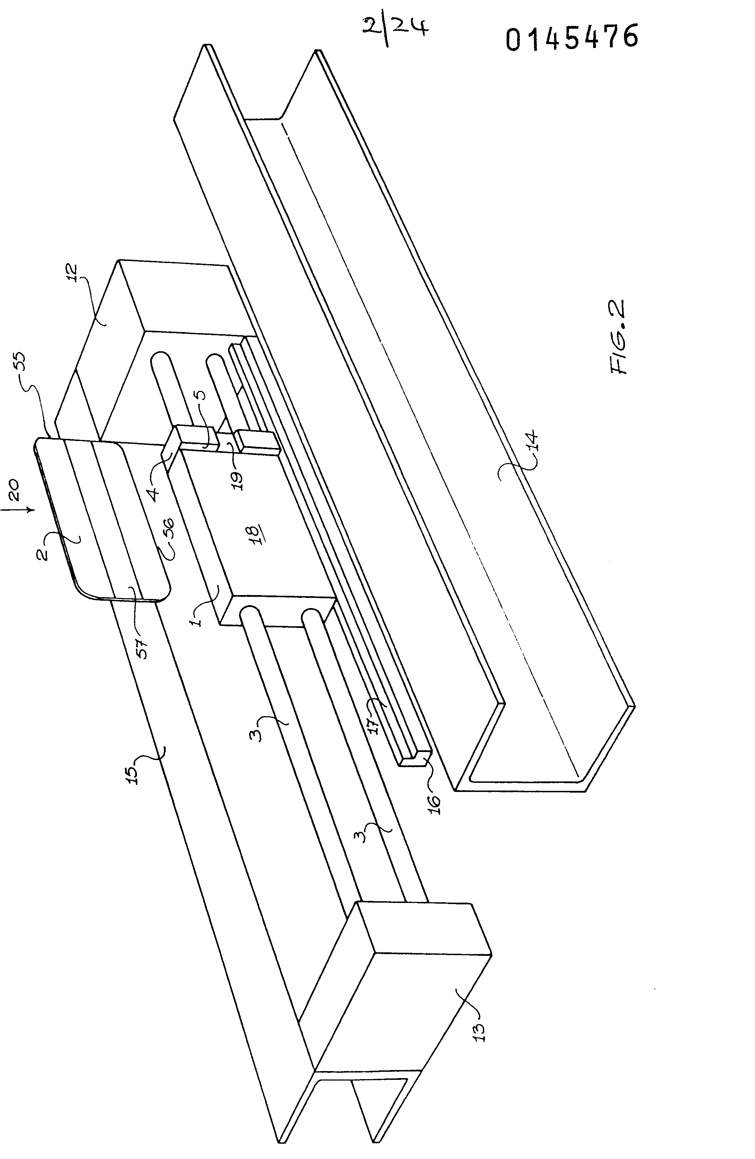

Figure 2 is a part-exploded schematic pictorial view showing ticket handling apparatus according to the invention for use in a ticket validator or canceller. In this drawing, the roller motor 6 of Figure 1 is omitted for clarity. The guide rails 3 are mounted between transverse members 12 and 13 extending across the width of the apparatus between front and rear channel members 14 and 15 respectively. The transverse members 12 and 13 may suitably be castings while the channel members 14 and 15 may be of aluminium, thus facilitating an especially convenient and economical construction of the apparatus of the invention. The front channel member 14 is shown displaced forwardly from the transverse members 12 and 13, to show the construction of the apparatus. A ticket stop bar 16 is disposed immediately below the carriage 1 and extends along part of the length of the apparatus substantially parallel to the guide rails 3. The bar 16 has a generally L-shaped notch 17 at its upper forwardly facing edge, so that when the channel member 14 is in its assembled position against transverse members 12 and 13, a groove is defined between the vertical face of this notch and the inner or rearwardly facing web surface of the channel member. This groove or slot serves to receive the lower or leading edge of a ticket inserted into the handling apparatus and to limit the extent to which the ticket can be inserted. Accordingly the edge of the groove defined by the vertical face of notch 17 in bar 16 is located parallel to and substantially coplanar with the planar surface 18 of carriage 1 over which ticket 2 moves during insertion into the apparatus in the direction of arrow 20 and against which it is disposed when accommodated in the apparatus.

As shown in Figure 2, the ticket 2 is of credit card configuration, so that it is substantially rectangular, having a transverse rear edge 55 engaged by the drive member 4 of the ticket transport means during advance of the ticket by the apparatus of the invention, and a lower edge 56 which is the leading edge of the ticket during insertion of the ticket into the apparatus to take up its transport disposition against face 18 of carriage 1. While such an orientation of the ticket is preferred, so that a magnetic stripe or coating 57 provided on the ticket may extend in the longer dimension of the ticket, i.e. longitudinally in the direction of advance of the ticket or parallel to its longer axis, it is not essential, and in an alternative embodiment, ticket handling or transport by the apparatus may take place by engagement of a drive member against one of the longer edges of a substantially rectangular ticket, one of the shorter edges then being the leading edge during an insertion operation. In either arrangement, switch devices are provided to indicate to control means of the apparatus when a ticket has been fully inserted and is in position to be advanced by the carriage. In a suitable construction of these devices, a light beam is provided which is interrupted on full insertion of the ticket. Associated light detecting means respond to interruption of the light beam, to initiate operation of the transport means. To ensure that a ticket, when intended to be handled by the apparatus in the disposition shown in Figure 2, i.e. with a longer edge leading in the direction of insertion, is inserted in this disposition, two switch devices are provided, spaced apart by a distance such that they can only be both triggered by the insertion of a ticket with a longer side leading. If a ticket is inserted with its shorter side leading, then only one or neither of the switch device light beams is interrupted and the apparatus transport means is not activated.

As already described in relation to Figure 1, advance of the ticket is achieved by engagement of the drive face 5 of the ticket drive member 4 against the rear edge 55 of ticket 2. As shown in Figure 2, drive member 4 has a recess or notch 19 substantially in its middle region, so that the drive face 5 is not continuous across the face 18 of the carriage 1, but is interrupted. This interruption is to allow the drive member 4 to pass by data transfer heads engaging a ticket during forward movement or advance of the ticket and also prevents any accumulation of dirt or dust from building up during use of the apparatus by providing an escape route for it from face 18 of carriage 1 and the drive face 5 of member 4. The ticket 2 is inserted when the carriage 1 is substantially at a ticket input station of the apparatus in the position shown in this Figure. The carriage 1 is then advanced towards the left hand side of the Figure, to a ticket output station.

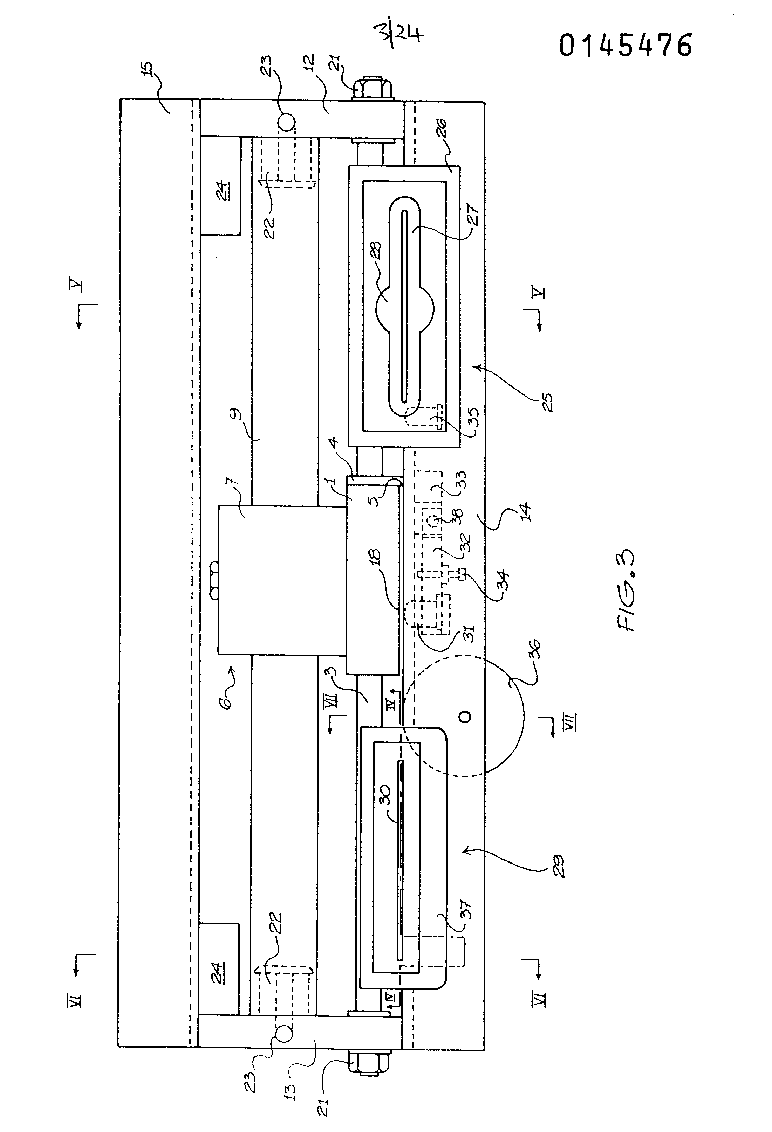

Figure 3 is a top view of a practical construction of ticket validator or canceller incorporating ticket handling apparatus according to the invention and operating substantially in the manner already described in regard to the outline drawings of Figures 1 and 2. The guide rails 3 have screw threads at their ends and are bolted into the mounting members 12 and 13 by means of nuts 21. The ends of the roller motor rubber tube 9 are fitted over retaining spigots 22, bores being provided through these spigots to air roller motor feed tapping points 23. These are shown as being on the upper face of the apparatus but they may also be brought to any convenient take-off point on any other part of the the apparatus. Roller motor stop members 24 are provided at each end of the travel of the motor 6, against which housing 7 abuts in its end positions, optionally in association with suitable resilient buffer means. Spring-loaded latch means may also be provided on or associated with the stop members to retain the motor in a respective end position until a further displacement is initiated by the control system of the apparatus. The latching force of these means is such as to suffice to hold the housing in an end position while being readily overcome by the motor driving force when motor displacement commences.

The ticket input station 25 is provided with a ticket input slot plate 26 incorporating a ticket input slot 27 which tapers downwardly from the upper surface of the plate 26. A widened finger recess 28 in the tapering slot 27 allows a user to push his ticket into the input station to the fullest possible extent. When the ticket is fully inserted, its upper or trailing edge lies slightly below the slot 27 over the greater part of the length of the slot and only a small portion of the ticket upper edge region projects upwardly of the slot in the finger recess region 28. The ticket output station 29 has a ticket output slot 30 in an output slot plate 37, a ticket being returned to a user if appropriate through this output or return slot 30. In operation of the validator or canceller, the ticket is carried forward, following insertion at the input station, to the output station 29, by carriage 1. Magnetic heads 31 and 35 for the exchange of data with the ticket are provided along the path of movement of a ticket between the input and output stations. As shown in Figure 3, head 31 is mounted on an arm 32, which is itself pivotably mounted in or on a base 33 fixedly attached or secured to the web of the channel 14 and located within the channel, so that the head 31 may move inwardly and outwardly towards the path of movement of the ticket, the web of the channel also having an appropriately positioned aperture through which the head 31 may project to engage the magnetic surface area of a passing ticket in a data transferring manner. Inward movement of head 31 may be limited by an adjusting screw 34 which serves as a stop for inward head movement. Biasing means are provided to urge the head inwardly towards the ticket path so that it rubs against the magnetic stripe 57 of a ticket passing between the input and output stations. In this way magnetically coded data on the ticket may be read or the magnetic material of the ticket may be magnetically coded. The head 35 is mounted similarily to head 31, but the mounting details for the head 35 are omitted from Figure 3 in the interests of drawing clarity. Preferably head 35 is a read head while head 31 is a coding head. The apparatus also incorporates a serial number printing wheel 36, which applies a successively advancing index number or applies price data to each ticket passing between the input and output stations.

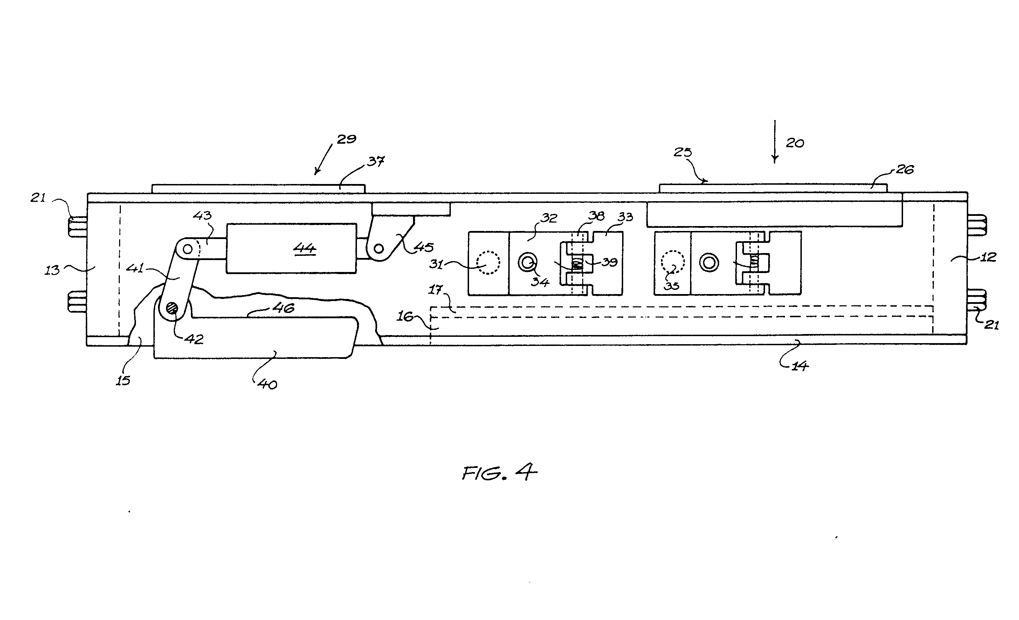

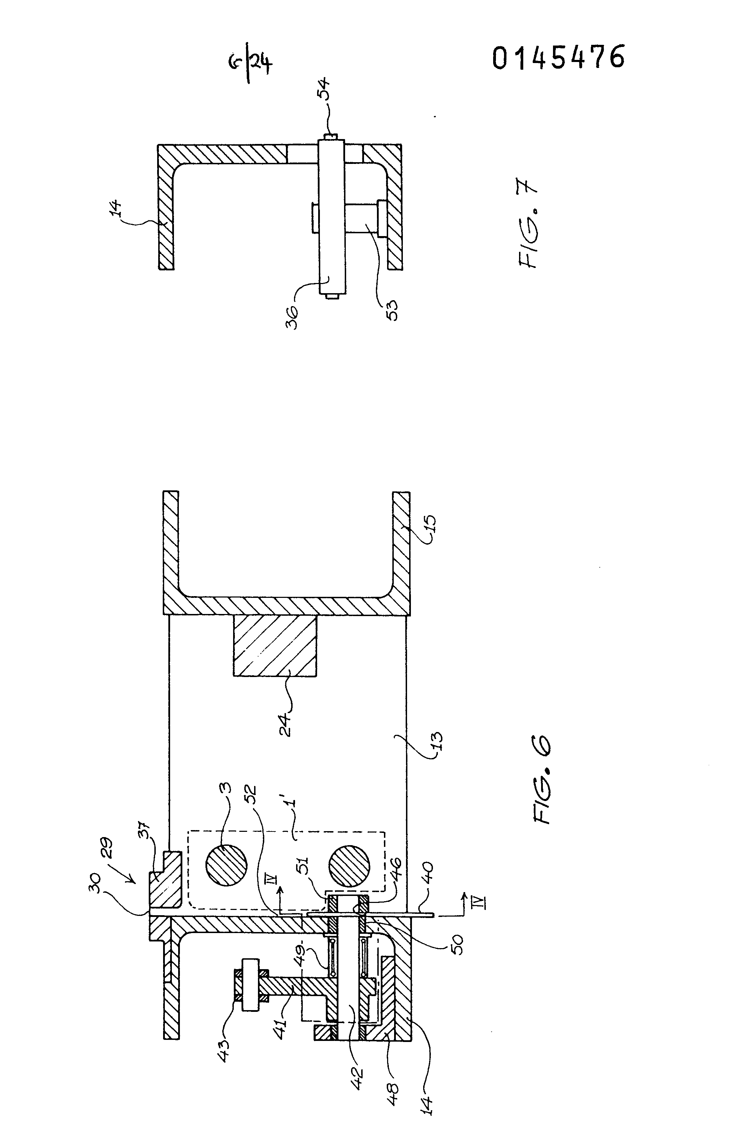

Figure 4 is a front view of the apparatus of Figure 3, part cut away in section along the lines IV-IV of Figures 3 and 6 to show the ticket ejecting arrangements at the output station. In addition to the apparatus parts already shown and discussed in relation to previous Figures, Figure 4 shows a pin 38 on which the magnetic head arm 32 is pivotably mounted relative to the base 33 and a spring 39 mounted about pin 38 by which the arm 32 is urged towards the path of movement of the ticket between the input and output stations. Arm 32 may accordingly pivot towards and away from the planar face 18 of carriage 1 and the arm is urged in the direction of the planar face 18 by coil spring 39 acting about the axis of pivoting defined by the pin 38. The adjusting screw 34 serves as a stop for head movement in the direction of planar face 18.

An ejection blade 40 is located at the output station 29, and in its quiescent position, it is disposed so that the lower edge of a ticket 2 advanced by the carriage 1 will be received on the upper edge surface 46 of the ejection blade 40. Accordingly surface 46 is in substantial continuation of the horizontal face of notch 17 in stop bar 16, so that the lower edge of a ticket driven forward by drive member 4 will run onto surface 46 as it enters the output station. Bar 16 terminates some distance short of the beginning of knife or blade 40 but the ticket traverses the intervening gap without guidance by virtue of the driving force acting on it on its rear edge transverse to the direction of extent of bar 16 and edge surface 46. The blade 40 may be pivoted in an upward direction by means of a lever arm 41. The lever arm 41 and the blade 40 are both fixedly mounted on a shaft 42, by means of pins or keys. Accordingly when the lever 41 is rotated, blade 40 is pivoted upwardly, lever 41, shaft 42 and blade 40 moving as a single unit. Rotation of lever 41 is brought about by the piston rod 43 of an air cylinder device 44. Piston rod 43 is pivotably connected to lever arm 41 and the cylinder of device 44 is pivotably mounted on a base 45, secured to the underside of the upper flange of the channel section 14. The serial number printing wheel is omitted from Figure 4 for clarity in the drawing.

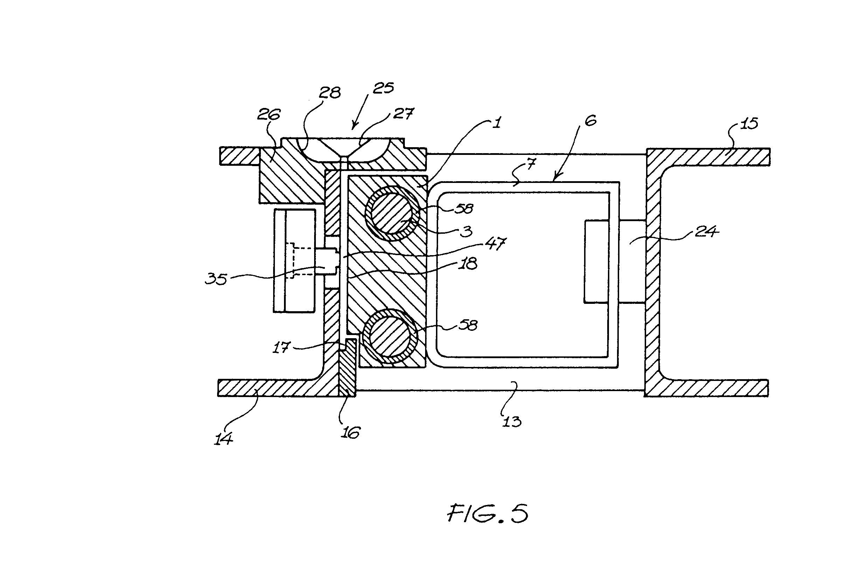

Figure 5 shows a sectional end view of the apparatus of Figures 3 and 4 on the line V-V of Figure 3, i.e. at the input station. All of the components shown have been previously identified in connection with the earlier Figures apart from the bushes 58 for sliding displacement of carriage 1 on guide rails 3. Only the housing 7 of roller motor 6 is indicated, the rollers and flexible tube being omitted for clarity. The ticket receiving space 47 at the input station 25 is defined between the front face 18 of the carriage 1 and the rearwardly directed face of the web of the front channel member 14. At the bottom of this region, the horizontal face of notch 17 extending between the vertically extending face of the notch and the rear face of the channel web closes off the lower end of the ticket receiving space 47. Accordingly when a ticket is placed in the input slot 27 and pushed down to its fullest extent, its lower edge contacts the upwardly directed or horizontal face of notch 17 to provide a limit on the degree of insertion.

Figure 6 is a similar sectional view to that of Figure 5, on the line VI-VI of Figure 3, i.e. at the output station. Apart from those items previously identified, this Figure shows a bracket 48 for rotatably accommodating the outboard end of ejector blade shaft 42. A spring 49 serves to keep lever 41 at a suitable spacing from the web of channel member 14. Shaft 42 is surrounded by a bush 50 where it passes through this web. Reference 51 relates to the boss on ejection blade 40 by means of which the blade is pinned or otherwise affixed, e.g. keyed, to shaft 42.

Carriage 1 in its position at the output station is indicated in Figure 6 in ghost outline by reference 1'. It will be seen that an output station ticket space 52 is defined between the front face 18 of carriage 1 and the rear face of the channel web, in the same manner as space 47 at the input station. A ticket delivered into this space 52 by the carriage 1 is swung upwardly by pivoting of the ejection blade 40 so that it emerges through the output slot 30, for recovery by a user. Activation of the ram or air cylinder device 44 to cause ejection of the ticket may be undertaken by the control system in association with completion of a driving movement of the roller motor from the input station to the output station or it may be triggered by a switch device or detector similar to those employed at the input station to detect ticket insertion, but arranged to detect arrival of a ticket at the output station.

Figure 7 shows the serial number or price or other data printing wheel 36. Other details of the apparatus in this region are omitted from this diagram for clarity. Wheel 36 is rotatably mounted on pin 53 and has a plurality of printing characters 54 (of which only two are shown) formed from ink retentive material, arranged around its periphery. The wheel may be self-advancing for each passage of a ticket through the apparatus or means such as a stepping motor may be provided for advancing it step by step, for each operation of the apparatus. A plurality of wheels may be provided to print a multiplicity of digits as required. As shown in Figure 7, the ink retentive characters 54 project into the space through which the ticket travels between the input and output stations so as to contact the surface of the ticket as it passes. Where the apparatus is intended to handle multi-journey tickets, the print wheel drive arrangements may be modified to ensure that individual journey data printed on a multi-journey ticket does not overlie previously-printed data.

The apparatus of the invention also includes or is associated with a control system or control means for activating the roller motor 6, ram 44 and other components of the apparatus at the appropriate phase during an operating cycle. The control system may include a micro-processor providing instructing signals to the various operating features of the apparatus in response to programmed instructions and inputs from monitoring devices and other operating parts of the apparatus or equipment with which it is associated.

Operation of the apparatus according to the invention in this embodiment is as follows. A user wishing to gain admission to a vehicle or railway station platform, or intending to validate his ticket, inserts his ticket into the input station slot 27. He pushes it down fully so that its lower edge enters into the groove defined between the upper part of the stop bar 16 and the rear face of channel 14. When the ticket is fully inserted, the switch device provides an appropriate indication to the control means of the apparatus and the air roller motor is activated, so that the carriage 1 is driven towards the output station. The drive face 5 of the ticket drive member 4 engages against the rear face of the ticket to move it forwardly. The ticket is prevented from sidewise movement in directions perpendicular to the plane in which it is received at the input station by the presence of the front face 18 of carriage 1 on one side and the rear face of the web of channel 14 on the other side. Carriage 1 thus effectively defines the side of a ticket containing groove or space which moves along the apparatus from the input station to the output station and the other side of which is defined by the channel web.

The stop bar 16 does not serve as a significant constraint on displacement of the ticket in its own plane during this advance of the ticket between the input and output stations and the groove defined between the web rear face and notch 17 has substantially no guidance function. As a result of the driving force being applied to the transverse rear edge of the credit card size ticket, there is substantially no force exerted on the ticket which will tend to displace it laterally within the plane defined by its own initial position in the input station. Accordingly while the stop bar continues for some distance towards the output station, it is found that during advance of the ticket, the lower edge of the ticket is not in substantial contact with the bottom of the groove or notch in the bar so that there is no significant engagement or rubbing. No restraint is applied to the upper edge of a ticket during ticket advance to inhibit lateral displacement of the ticket in a direction within its own plane. The apparatus is provided with a cover plate (not shown in the Figures), but there is at all times a clearance of about 3mm ($1/8$ inch) between the upper edge of the ticket and the underside of the cover.

The upper edge surface 46 of the ejection blade 40 is in substantial alignment in its ticket receiving position with the bottom of the notch 17 in bar 16, so that the lower edge of the ticket runs in over the ejection blade as the carriage transports it into the output station. Arrival of the carriage at the output station triggers the air cylinder 44, typically by means of a photo-electric device, which causes the ejection blade to pivot and swing the ticket upwardly towards the output slot 30 so that the user can retrieve it. In the course of its movement between the input and output stations, the ticket is pressed against magnetic heads 31 and 35. In a typical arrangement head 35 reads magnetic coding on the ticket. The coding detected determines whether or not a device associated with the ticket handling apparatus, for example, a turnstile, is opened to admit the passenger. Magnetic head 31 may be a check head or alternatively a head for recoding the magnetic strip, where multi-journey or similar tickets are in question.

In use of the apparatus, as a ticket is driven forward by drive member 4 with one of its planar faces juxtaposed against planar face 18, the opposite planar face of the ticket, which carries a coating of magnetic material over at least a part of its extent, is engaged during the transport operation by head 31, which is urged against the magnetic material by the action of spring 39. Since head 31 is mounted at the end of arm 32 for displacement towards and away from face 18, it will move towards and away from planar face 18 during the passage of the ticket to take account of any undulations or irregularities in the surface of the magnetic material, such as for example those caused by crumpling or abuse of the ticket. The spring 39 ensures that head 31 is continually maintained in contact with the magnetic material, by urging arm 32 in the direction of planar face 18 as the carriage 1 passes the magnetic head. The stop provided by adjusting screw 34 limits the travel of head 31 in the direction of planar face 18, to ensure that the head does not come in contact with the planar face 18 when the carriage passes by during return movement when no ticket is present. Head 35 behaves similarly to head 31 during the passage of the ticket.

The control system associated with the handling apparatus may also include a facility for preventing return of the ticket to the user in the event that it is invalid. Alternatively, the system may allow for the ejector blade 40 to be pivoted downwardly when a ticket is either invalid or expired, so that it is "swallowed" within the apparatus. Ticket travel time through the apparatus is typically less than one second and is quicker than or comparable with the time required by a user to pass through an associated turnstile or gate.

The stops 24 associated with the roller motor may include micro-switches by means of which various further functions of the control system are activated when the roller motor reaches one or other of its end positions. The roller motor may be substituted by a pneumatic piston and cylinder type motor of conventional construction, or alternatively by an electric drive, for example, a solenoid motor. The ejection blade 40, as shown in the Figures, is activated by a double-acting air

cylinder device 44. Alternatively two single acting devices may be connected in series, so that one is extended when the other is contracted, the devices being connected between the end of the operating lever for the blade and a fixed pivot point. In this event, it is most convenient to accommodate the cylinder devices within the rear channel member 15, and to carry the shaft 42 for the ejection blade across the full depth of the apparatus from the front to the rear.

The use of an air motor in the apparatus of the present invention results in a substantial proportion of the distance travelled by the carriage between the input and output stations being traversed at a substantially uniform speed. This allows the ticket to carry a greater number of magnetically coded pieces of information than is the case when belt drives are used to convey the ticket between the input and output stations, or likewise, a greater number of pieces of information to be coded onto the ticket during its transit of the apparatus of the invention. It has been found that has many as eleven discrete bytes of relevant data may be applied to or carried by the magnetic stripe of a ticket for use in the apparatus of the present invention.

As shown in Figures 2 and 3 and related drawings, the ticket is inserted into the apparatus in a vertical disposition, so that it is disposed in a vertical plane during its movement between the input and output stations. It may also be disposed in a horizontal orientation during this movement, in which case the entire apparatus is turned through $90^0$ and the ticket is inserted into it through a slot in its side. Substantially no change is required in the apparatus of the invention by virtue of this change in orientation. The forward drive of the ticket by the face 5 of the drive member 4 means that the ticket is driven forward in a uniform manner without any tendency to skew laterally within its plane of movement in either orientation.

This freedom from lateral vibration or displacement is a further advantageous feature of the present invention in increasing the amount of data which can be accommodated on the magnetic recording medium of the ticket for use in the apparatus of the invention.

By virtue of the particular arrangement of "controlled magnetics" applied in this embodiment of the invention, the ticket is advanced between the input and output stations by edge engagement of the drive member against a transverse rear edge of the ticket, so that there is no need for any constraint or guidance of the lateral or elongate edges of the ticket during ticket advance. The magnetic stripe is maintained parallel to the direction of travel of the ticket by this engagement of the drive member against a surface substantially at right angles to the elongate direction of the stripe. This positive control of ticket advance permits the application of an enhanced number of discrete bytes of information to the magnetic material of the ticket without the risk of reading only part of the information from one transversely coded portion of the material and erroneously associating it with part of that from an adjacent section of the ticket. Cross-coupling of this kind may come about where a ticket skews or undergoes partial sidewise displacement within its own plane during transit of the apparatus. The positive control provided by the invention ensures that the transverse magnetically coded regions of the tickets are always at right angles to the direction of ticket passage past the magnetic heads.

It is also possible for the apparatus of the invention to operate satisfactorily at relatively low magnetic head pressures. In known units in which the ticket is transported by belts, head loadings of up to 100gm may be required, which causes retardation of ticket advance as well as possibly inducing some slewing of an imperfectly aligned ticket. In the present invention, even if the head loading is high, this does not bring about any substantial slowing of ticket advance, while neither can it induce lateral displacement on account of the positive drive afforded by the edge engagement of the drive member. Head pressure can be varied by alteration of the spring force on the mounting arm for the head.

The apparatus of the invention is particularly suitable for handling multi-ride tickets such as ten-journey tickets. The ticket is pre-coded and successive journeys deleted as it is used. Head 35 may check whether any valid coding remains on the ticket while head 31 then rewrites the coding as necessary to state the number of usable journeys remaining. The apparatus is suitable not only for tickets of plastics material, but also for paper multi-journey tickets.

The electronic control system for regulating operation of the apparatus and associated with the reading of the magnetically coded data may include a frequency modulation feature which allows the apparatus to accommodate itself to minor variations or inconsistencies in the speed of carriage drive. Accordingly even if the air-motor speed is not as uniform as it should be, or if an electrical drive is used, consistent and reliable data reading remains practicable. Byte spacing on the magnetic stripe is fixed in space and may be for example, 1.5mm ($1/16$ inch) along the 3mm ($1/8$ inch) wide stripe, but it will vary in time depending on the actual speed of the carriage drive motor. However by adjusting the processor timing in dependence on the time required to read in the first byte of information encountered, the processor may be adjusted so that its timing matches the ticket speed for each ticket. By this matching of processor timing to ticket speed, it is ensured that the reading of subsequent bytes by the control system is correctly interpreted, so that for ten-journey tickets in particular, the coding giving the number of journeys remaining at the disposal of the user is appropriately read and the system neither validates or responds to an expired ticket nor refuses a valid ticket.

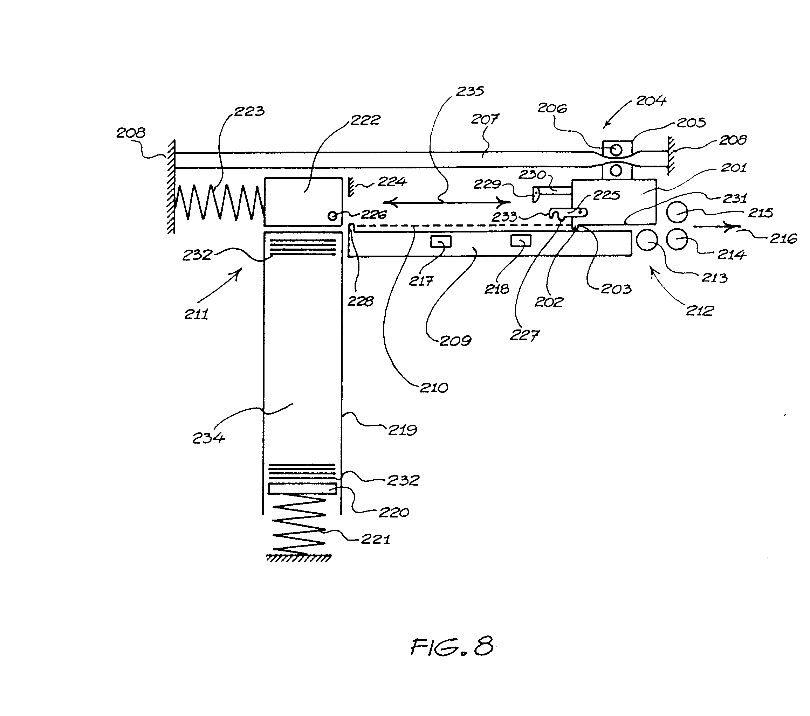

As shown in Figure 8, a ticket vending or ticket issuing machine incorporating ticket handling apparatus according to the invention has a ticket transport carriage 201 slideably translationally displaceable along guide rails 236 (not shown in this Figure). The carriage 201 has a ticket drive member 202 having a drive face 203 which engages the transverse rear edge of typically a substantially rectangular ticket being moved by the carriage 201. An air-driven roller motor 204 mounted on the rear of the carriage 201 has a housing 205 within which rotatably mounted rollers 206 define a pinch gap. A rubber tube 207 extending between end fittings or fixed points 208 is gripped in the pinch gap between rollers 206 and the carriage 201 may be displaced in a longitudinal direction by selective pressurisation of one or other of the volumes within the tube defined between the pinch gap and an end point 208. A ticket being transported by the carriage 201 is retained between the front planar face 231 of the carriage and the outer rear surface of the web of a channel 209, in a similar manner to the arrangement already described in relation to Figures 2 to 7, so that one face of a ticket is substantially engaged against face 231 during transport by the carriage. The path of a ticket being moved by the carriage 201 between an input station 211 and an output station 212 of the apparatus is indicated by the dotted line 210. At the output station 212, the carriage 201 abuts against a stop, in which position the leading edge region of the ticket overlies a pickup roller 213. Accordingly the ticket is then gripped between the roller 213 and the carriage surface 231 and roller 213 is rotatingly driven to slide the ticket forward from the carriage. As the ticket is advanced, its leading edge region is then gripped between lower 214 and upper 215 pinch or ticket drive rollers, one of which is driven, and the ticket is thus further advanced in the direction of arrow 216 to a ticket exit or recovery station of the apparatus.

Data transfer means such as magnetic heads 217 and 218, which project through holes in the web of the channel 209, allow the transfer of data between control means or memory devices of the apparatus and a magnetic coating or strip on the ticket.

At the input station of the apparatus, a stack 234 of tickets is retained in a ticket stack holder 219. A number of tickets 232 is indicated at the top and bottom of the stack. The tickets are urged towards the input station of the handling apparatus by means of a bias plate 220 urged towards the input station by a spring 221, which is most suitably an air spring. Movement of the tickets towards the input station is restrained at the input station end of the stack by means of a ticket stack retaining carriage 222, which is mounted on the same guide rails as transport carriage 201 for longitudinal sliding displacement and against which carriage 201 engages or abuts as it moves into the input station 211. A spring 223 urges carriage 222 in the direction of ticket advance from station 211 towards output station 212 against a stop 224, to maintain it in a stack retaining disposition at the ticket input station. Carriage 201 is provided with two coupling members 225, one on each side of the carriage. Each coupling member has a hook portion 233 at its leading end, which is engageable over a corresponding coupling pin 226 on the stack restraining carriage 222. The coupling members 225 are each mounted for limited pivoting movement in a substantially vertical plane, so that they can ride over and engage on the respective pin 226 when the carriage 201 comes against carriage 222. On the lower surface of each coupling member 225, a cam surface 227 is defined, which engages an uncoupling pin 228 for uncoupling the member 225 from the pin 226. Operation of these components is described below.

Carriage 201 also carries a print cam member 229 pivotably mounted at the leading end of a print cam support bar 230 in the direction of carriage 201 movement towards the input station. Bar 230 is of inverted channel shape at its leading end, and cam 229 is pivotably mounted within the channel portion. Cam 229 is shaped so that it may pivot towards carriage 201 when it encounters a corresponding print cam member in carriage 222 during forward movement of carriage 201 towards and against carriage 222, but will exert a downward camming action on the print cam member during return movement of carriage 201 towards the output station.

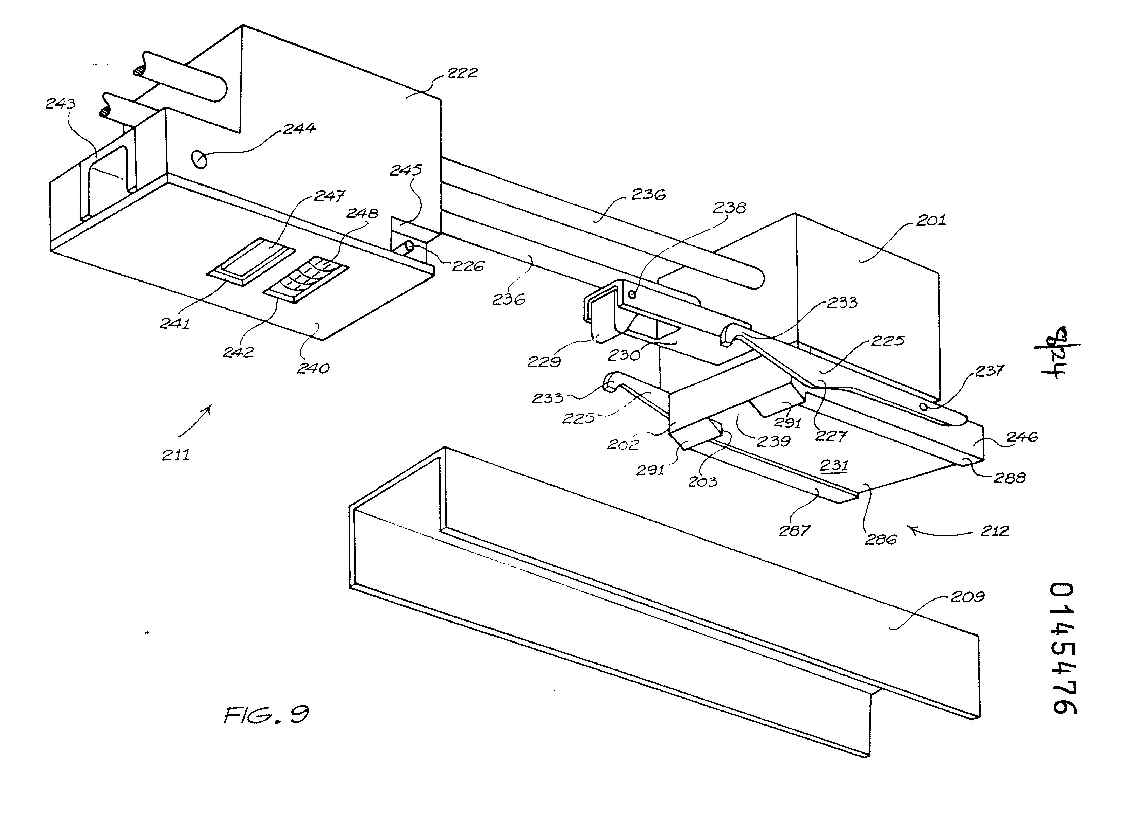

Operation of the apparatus shown in Figure 8 is as follows. The carriage 201 is initially at the output station 212 and, on activation of the apparatus, is driven by the air motor 204 towards the input station 211. As carriage 201 approaches carriage 222, the leading ends of hook portions 233 of hook or coupling members 225 ride up over pins 226 by virtue of camming engagement of their leading ends with the pins 226, and as carriage 201 abuts against carriage 222, the hooks 223 engage over pins 226, thus coupling the two carriages together. Continued advance of carriage 201 pushes carriage 222 away from its stack restraining position into a clear position, and at the same time carriage 201 moves across the top of the stack, so that restraint of the stack continues during this combined movement of the carriages. A stop is provided to bring the combined or coupled movement of the carriages to a halt when carriage 201 is aligned over the ticket stack with the uppermost ticket engaging against the carriage surface 231 and with the rear transverse edge of this ticket located in the vicinity of the drive face 203 of drive member 202. The drive member 202 has a depth of approximately two-thirds of the thickness of the ticket and extends substantially perpendicular or normal to the face 231 of the carriage 201. The lower edge region of drive member 202 defines an inclined or slanting surface 291 (Figure 9) which slopes upwardly from its intersection with the substantially vertical drive face 203 in a direction towards carriage 222. When this sloping surface 291 encounters the top ticket in the stack, it rides over it without jamming or damage and as the carriage 201 moves into its position over the stack, the tickets are pressed down to a small degree by member 201 until the lowermost region of drive member 202 clears the stack, and the uppermost ticket of the stack is then urged upwardly into recess 286 (Figure 9) with its rear transverse edge in engagement with drive face 203.

Return movement of carriage 201 now commences. Drive face 203 slides the uppermost ticket on the ticket stack 234 away from the top of the stack and onto the upper web surface of channel 209, along which it slides en route to the output station 212, without disturbing or displacing the next ticket in the stack, which is stepped up by the action of air spring 221 to become the new uppermost ticket of the stack. The carriages 201 and 222 are coupled together at this time by virtue of the engagement of hooks 233 over pins 226, so that carriage 201 draws carriage 222 back from its clear position towards its ticket stack restraining position during this initial portion of the return movement of carriage 201 to the output station. Although carriage 222 is already biased by spring 223 to move from its clear position towards its stack retaining position, this coupling together of the carriages ensures that the stack is at no time left uncovered by one or other carriage, so that restraint on the stack exists at all times. When carriage 222 is substantially back in its stack restraining position, abutting stop 224, the position of carriage 201 is such that the cam surfaces 227 on coupling members 225 engage the respective pins 228, so that the coupling members 225 are pivoted upwardly and their hook portions 233 are disengaged from pins 226.

Further movement of carriage 201 then takes place on its own, independently of carriage 222, over the upper surface of channel 209 until carriage 201 reaches the output station, where the ticket is pinched between roller 213 and surface 231 and advanced to the output pinch rollers 214 and 215. During its motion along the upper surface of the channel web, it passes over the magnetic heads 217 and 218, at which time data on the ticket may be read if required or alternatively and more usually, data will be encoded onto the ticket. Subsequent operations or cycles of the apparatus of this embodiment of the invention then continue in the same manner. The direction of reciprocation of carriage 201 is indicated on Figure 8 by arrows 235.

Figure 9 is a pictorial view from below showing a number of the items of the apparatus of Figure 8 in their operating relationship, but with a considerable number of components of the practical construction of the apparatus omitted for clarity. In addition to items previously described in relation to Figure 8, Figure 9 shows the guide rails 236 on which carriages 201 and 222 slide. The rails are cylindrical bars and are received in low friction bushes within the respective carriages. Coupling members 225 are pivoted to a foot portion 246 of carriage 201 by means of pivot pins 237. Cam member 229 is pivoted to channel support 230 by means of a pivot pin 238. A central recess 239 is provided in drive member 202 to allow it pass safely over the heads 217 and 218 in channel 209. The lip of the drive member 202 and the recess 239 are substantially exaggerated in this Figure compared with a practical construction, for clarity of explanation. While the ticket is driven forwardly by the edge engagement of the drive face 203 against its rear edge and no lateral guidance is necessary, as is also the case for the embodiment first described, a shallow recess 286 is provided in the face 231 of the foot 246 to prevent jamming as a ticket is removed from the stack. This recess is defined between side portions 287 and 288 and is comparatively shallow, its depth being approximately three-quarters the thickness of the ticket, i.e. 0.38mm (0.015 inches).

Carriage 222 is provided with a stainless steel face plate 240 on its lower surface. Plate 240 abuts against the top of the ticket stack in the stack restraining disposition of carriage 222 and has apertures 241 and 242 through which respectively, fixed data is printed on the uppermost ticket of the stack by means of a fixed data printing block 247 and a serial number is applied by a series of serial number printing wheels 248. These printing components are accommodated within an inverted channel shaped printing member 243, which is housed within a hollow interior portion of carriage 222. Printing channel 243 is pivoted within carriage 222 by means of a pivot pin 244, located towards one end of the printing channel 243. Accordingly the channel can be pivoted upwards and downwards, to bring the printing blocks and wheels into contact with a ticket on top of the stack. The stainless plate 240 also overlies a recess 245 in each side of the lower portion of the carriage 222, in each of which a pin 226 is located.

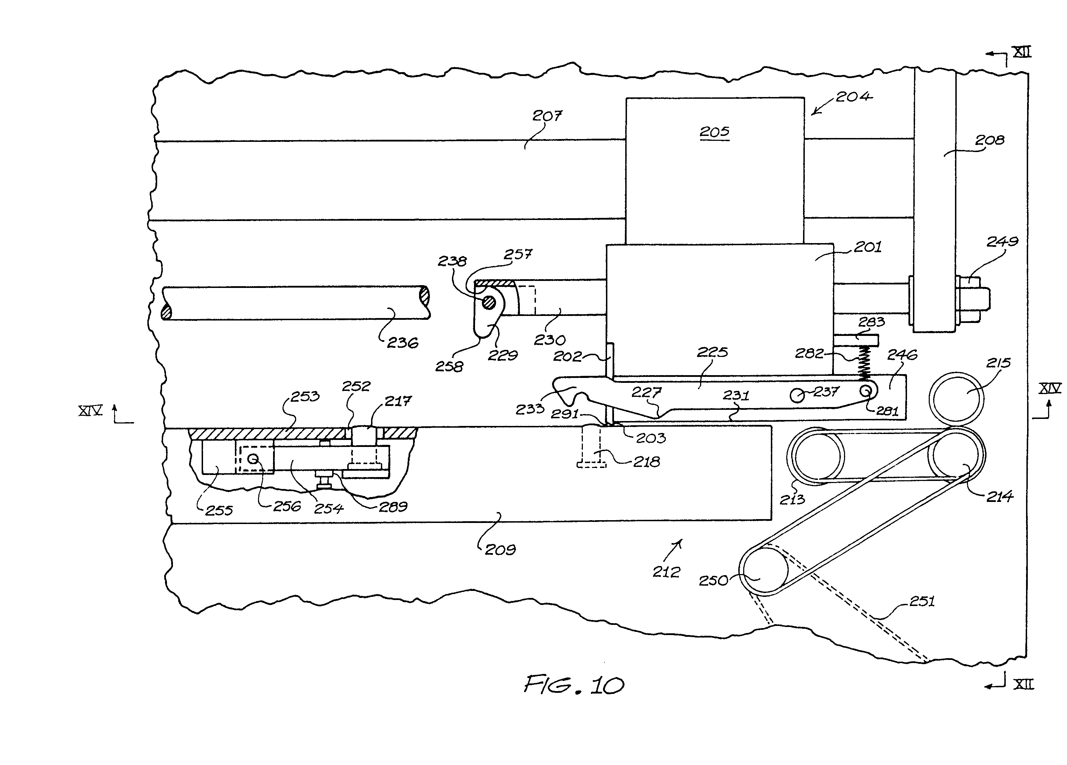

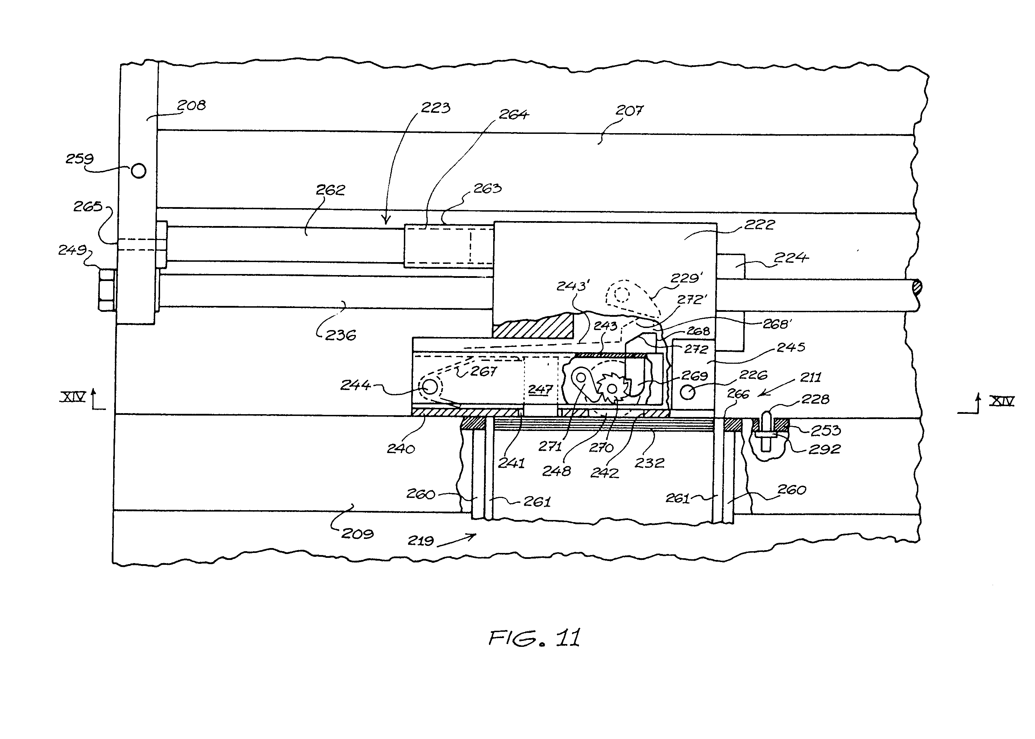

A practical construction of ticket vending or issuing apparatus embodying the ticket handling means of the invention is shown in Figures 10 to 15. Figure 10 is a front view of the ticket output station of the apparatus, showing carriage 201 at its output station end position. Some of the various components have been previously identified in relation to Figures 8 and 9, and only additional aspects disclosed in Figure 10 are now discussed. It will be seen that the rails 236 have screwed ends and are mounted by means of nuts 249 in end members 208. These end members also receive by means of suitable fittings the ends of the air motor tube 207 and contain passages communicating with respective air sources and control valves for the air motor. The other end member 208 is shown in the following Figure 11. In addition to channel member 209, the apparatus includes a further channel member or members extending between the end plates or castings 208 to provide a stable and robust construction. For clarity not all members are shown and the full extent of those items shown is not necessarily depicted. The drive rollers 213 and 214 are driven by means of belts from a main drive pulley 250, itself driven by a main drive belt 251 from an electric motor, not shown in this Figure.

It will also be seen by comparison with Figure 9, that in the practical construction the print cam support member 230 is in fact substantially in alignment with and located between the guide rails 236. For clarity in Figure 9, this member was shown downwardly displaced below these rails. In Figure 10, the leading end of member 230 is shown cut away, to reveal the channel-form of this leading end and the cross-sectional shape of cam 229. It will be seen that the cam has an upper surface 257 which is substantially flat at its outer or leading side and abuts against the inside surface of the channel web when the lower end 258 of the cam 229 is directed downwardly. This is the normal position of the cam, which it assumes under gravity. When the cam encounters an obstacle in the course of a movement of carriage 201 to the left in Figure 10, it pivots upwardly to the right, so that the cam lobe 258 rides over the obstacle. During a return movement of carriage 201 towards the output station 212, it will be seen that the cam cannot pivot to the left, as face 257 bears against the inner web of the channel. Accordingly when the cam encounters an obstacle in this direction of movement, it exerts a downward camming force on the obstacle.

A portion of web 209 is also depicted cut away and in part section, to show the mounting of data transfer magnetic head 217. This head projects through an aperture 252 in the web 253 of channel 209. Head 217 is mounted on an arm 254 which is pivoted to a base 255 by means of a pivot pin 256. Base 255 is secured to the interior of the web of the channel, and a spring urges arm 254 in the direction of the web, so that head 217 is pressed against a ticket passing between the input and output stations. A similar arrangement, not illustrated in detail, is provided for head 218. It will be seen that the mounting arms trail with respect to the direction of arrival of the ticket. An adjustable stop 289 limits movement of head 217 inwardly against the ticket as in the first embodiment.

At the leading end of carriage 201, in the direction of advance of a ticket, tension springs 282 extend between supports 283 projecting from or attached to the carriage and mounting points 281 on the coupling members 225 at their ends remote from the hook portions 233 and on the opposite side of the pivots 237 relative to the hook portions, so that the tension of the springs urges rotation of the coupling members about the pivots 237 in a coupling direction. Accordingly the camming action of screw cams 228 (Figure 11) on cam portions 227 of coupling members 225 acts against the pivoting forces exerted by these springs.

Figure 11 shows the input station 211 and represents a leftward continuation of Figure 10. An air connection 259 for the roller motor is illustrated in block 208. The ticket stack holder 219 has side plates 260 and, inside these, guide plates 261 which engage the transverse edges of tickets in the stack. The guide plates 261 extend through an aperture of appropriate shape identified as 266 in the web 253 of channel 209, so that the upper ends of the guide plates 261 are substantially in the same plane as that in which the lower face of the ticket travels between the input and output stations of the apparatus. The channel section is also cut away to show the pin 228 for disconnecting the coupling members 225 from pins 226 in the course of operation of the apparatus. This pin is in the form of a screw engaging for example in a screwed bore in web 253 and locked in position by a locknut 292. The degree of penetration of the pin and therefore its camming action may then readily be adjusted.

The spring means 223 for urging the carriage 222 against stop 224 consists of an air spring having a piston portion 262 and a cylinder portion 263, a labyrinth seal arrangement being provided in their overlapping region 264 to prevent loss of air. The spring is fed with air at a relatively low level of pressure, for example 5 p.s.i., through an air feed passage 265 in member 208. Air consumption in the spring is low as a result of the use of the labyrinth seal.

Portions of carriage 222 and printing channel 243 are cut away in order to illustrate the internal working of the ticket printing arrangement. Channel 243 is pivotable about pin 244 between a lower or printing position shown in full outline in Figure 11 and an upper position in which the printing block and wheels are spaced apart from a ticket at the input station. The disposition of the upper surface of the channel web when thus located is indicated in ghost outline by reference numeral 243'. A spring 267 urges channel 243 towards this upper position. On top of channel 243 at its end distant from pivot 244, there is located a print channel cam block 268. This has a vertical surface on its side disposed towards the transport carriage 201, and a sloping face 272 on its other side, sloping upwardly from the upper surface of channel 243 in a direction towards the transport carriage 201. This cam block and its sloping face are indicated in ghost outline in the upper position of the print channel by references 268' and 272'. Cam 229 is also indicated in ghost outline at 229', in the pivoted disposition which it assumes during a movement of the transport

-55-

carriage 201 from the output station to the input station on engagement against the vertical face of cam block 268 in the disposition indicated by reference 268'.

It will be seen that the lobe of cam 229 is deflected upwardly and to the right by its encounter with the vertical face of block 268. During return movement of the carriage 201 however, shortly after disconnection of the carriages, cam 229 will press down on the sloping surface 272 of block 268 and will urge it downwardly, since during this return movement the cam 229 is prevented from pivoting by virtue of impingement of face 257 against the interior of the web of channel 230, so that channel 243 is pivoted downwardly and the printing block and the serial number printing wheels are pressed against the ticket then on top of the stack. Accordingly each ticket is printed immediately after the previous ticket has been removed from the stack by the transport carriage 201.

The arrangement for advancing the serial number on each operation of the print channel includes a ratchet wheel 270 driving the unit wheel of the serial number printer. On each operation of the print channel, the ratchet wheel is advanced to the extent of one serial digit by an advancing member 269 fixed to the carriage 222 and extending downwardly within the channel 243 from its point of attachment to the carriage through a cut-out portion in the channel. A pawl 271 is provided within the channel to lock the ratchet wheel in position during each printing operation and prevent reverse movement of the ratchet wheel. Pawl 271 is pivoted on a flange of channel 243 and biased by a suitable spring against the ratchet wheel. The serial number printing wheels are geared together, so that appropriate advance of the wheels for tens and higher digits takes place at due time. Ink retentive material is used for the printing block, to print standard data on each ticket, as well as for the serial number printing characters on the wheels. Thus the use of an inking pad may be avoided.

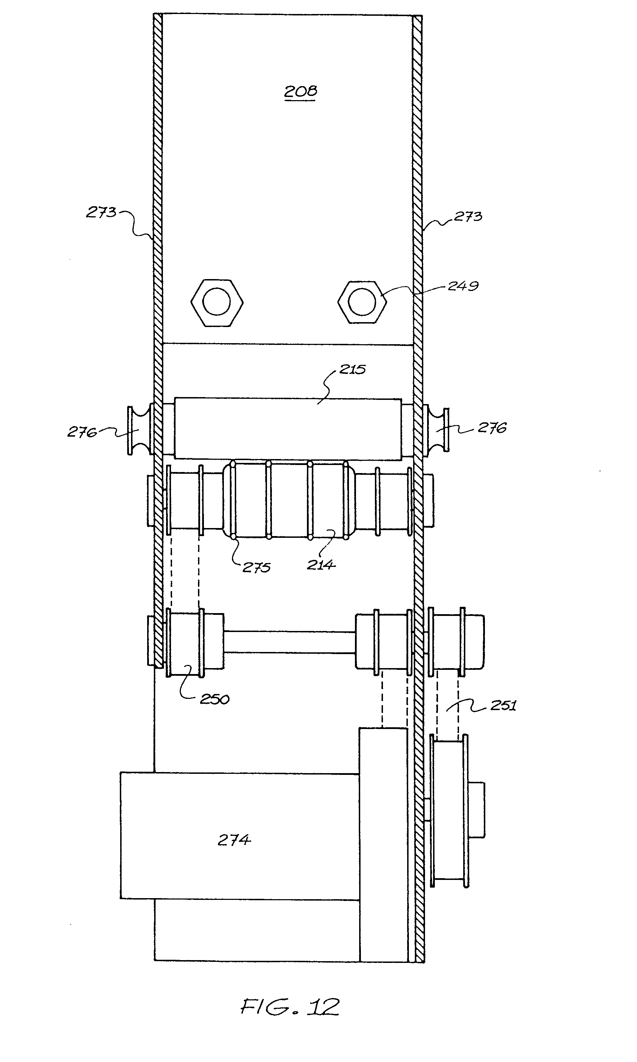

Figure 12 is an end view of the apparatus from the right hand side of Figure 10. This shows the ticket delivery arrangements of the apparatus. In addition to items previously identified, this drawing shows side plates 273, forming the support members between which various other transversely extending items are retained. The motor 274 drives a pulley train through the main belt 251. Not all pulleys and belts of the drive chain are individually identified. The lower pinch roller 214 is provided with a number of O-rings 275 for gripping a ticket against the undriven upper pinch roller 215. The upper roller 215 is displaceable towards and away from the lower roller 214 and is urged towards that roller by springs acting on the outboard spigot portions 276 of the shaft on which roller 215 is mounted.

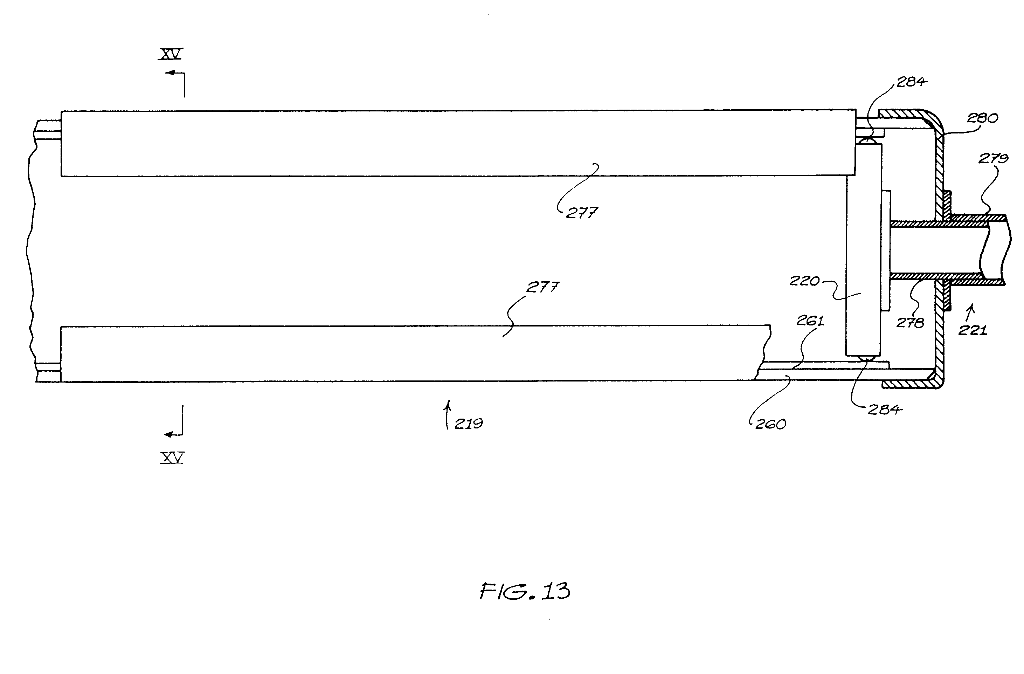

Figure 13 shows the ticket stack holder 219. The side plates 260 have or are provided with flap portions 277 which overlie a lateral portion of the stack, while still leaving an intervening space through which the stack may be observed, with a view to assessing the need for replenishment etc. The bias plate 220 is attached to a piston portion 278, which extends through a sleeve 279 in a cap 280 of the holder 219 to an air spring of similar configuration to that already described in relation to carriage 222. Plate 220 has rollers 284 which are spring biassed against the guide plates 261.

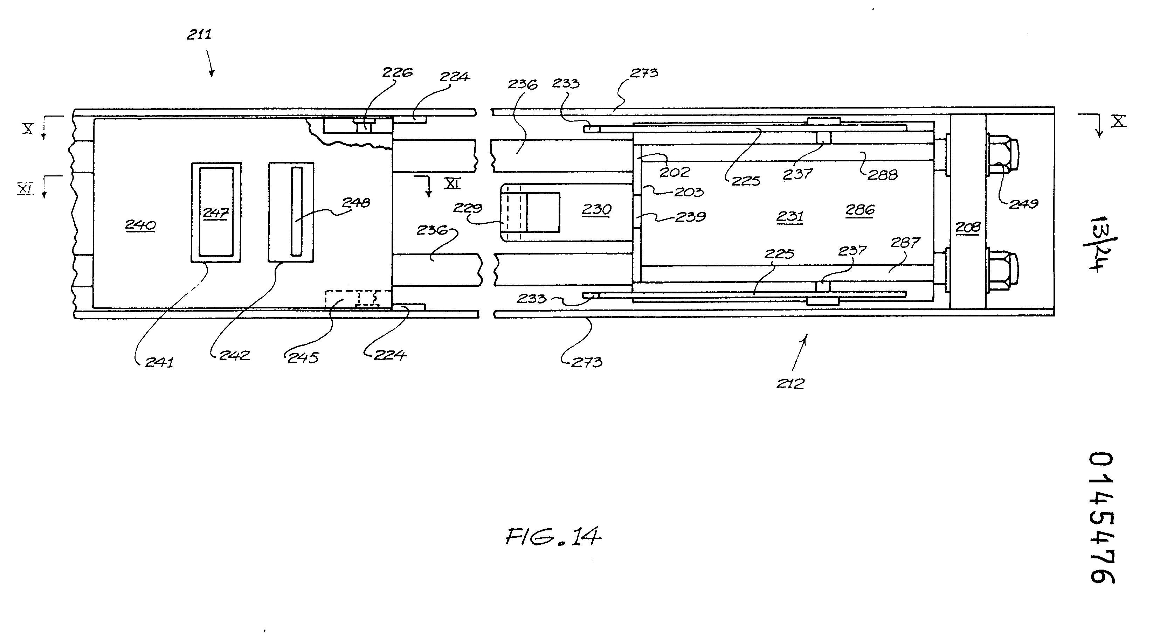

Figure 14 is a view looking upwards towards the transport and ticket stack restraining carriages from below. The drawing is shortened to include both input and output stations of the apparatus. The items shown in the drawing have all previously been described and no further enlargement is now required.

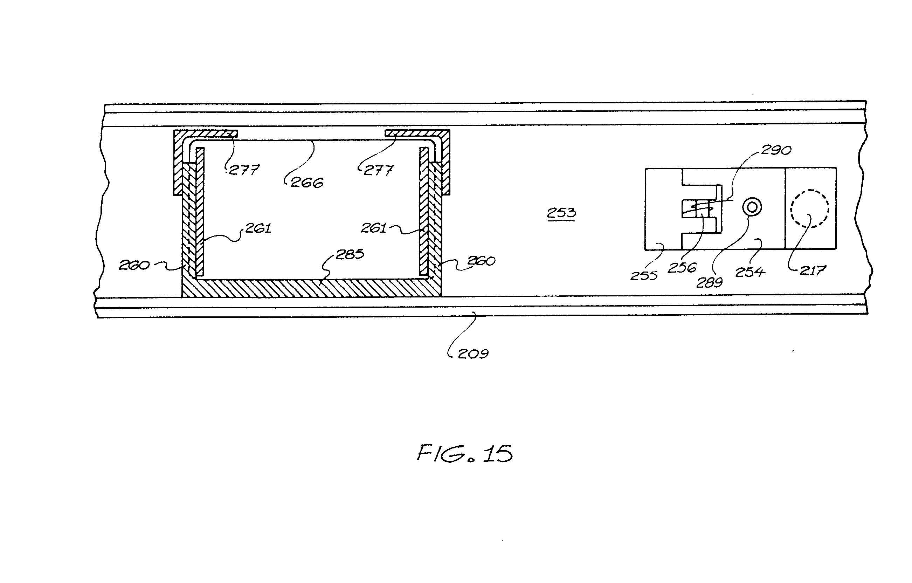

Figure 15 is a further upward view, on a section through the ticket stack holder, again showing components already referred to. It will be seen that the side plates 260 of the ticket stack holder are also bridged by a further backing plate 285, in substantial opposition to the flaps 277. The aperture 266 in the web 253 of channel 209 through which the tickets enter the input station is also apparent in this drawing, while spring 290 for urging magnetic head 217 against passing tickets is also depicted.

Operation of the apparatus has already been described in relation to the outline diagram of Figure 8, and additional aspects of its functioning will be apparent from Figures 10 to 15 inclusive. As shown in these Figures, the ticket stack is arranged below the plane of movement of the ticket and tickets are urged upwardly into this plane. However the stack may also be arranged above the plane of transport of the tickets, where desired. As will be apparent from the first embodiment of the invention described in relation to Figures 1 to 8, the ticket may also travel in a vertical orientation rather than horizontal, and in some cases a ticket vending or issuing machine may embody the apparatus of the invention in this "vertical" configuration also, in which the ticket stack extends laterally or horizontally. In the present embodiment, the apparatus of the invention may be included in a desk-top unit for manual operation or supervision, or in an automatic machine. In the latter case, the ticket stack is of a size to accommodate up to two days supply of tickets.

The magnetic heads 217 and 218 are urged into data transfer relationship with magnetic material such as a magnetic stripe on the opposite face of the ticket from that engaged against planar face 231. The heads 217 and 218 project through the apertures 252 in the web 253 of the channel 209, which is disposed on the opposite side of the path of movement of the ticket from the face 231 of carriage 201. The head 217 is mounted at the extremity of the lever arm 254, and the spring 290, which may be a coil spring about the pivot pin as shown or alternatively may be a leaf spring or other similar arrangement, urges arm 254 towards web 253 and accordingly urges magnetic head 217 into a disposition in which it is pressed against the magnetic material of a ticket moving past the head under the action of drive face 203. The adjustment screw 289 limits the forward travel of head 217 in this direction, so that it is not struck by carriage 201 during the return movement of the carriage in the absence of a ticket.

This embodiment of the apparatus also includes a control system for regulating its operation in generally similar manner to the arrangement described in relation to the first embodiment. Detector means are provided for activating various functions of the apparatus in dependence on the locations of the carriages and the advance of a ticket, while the system also controls the coding of magnetic material onto the ticket, for example by head 217, as well as allowing for subsequent reading of the coding for checking purposes, for example by head 218.

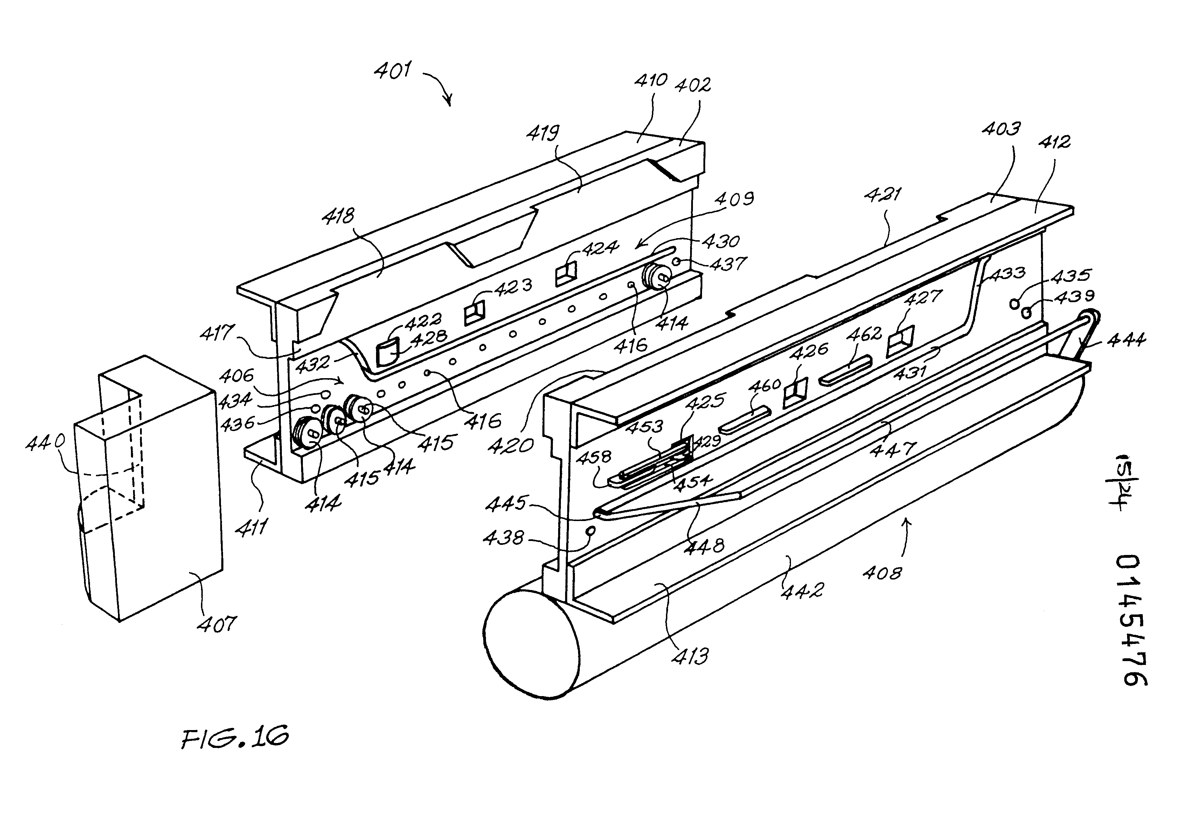

Yet another embodiment of ticket handling apparatus according to the invention will now be described having regard to Figures 16 to 21 of the drawings.

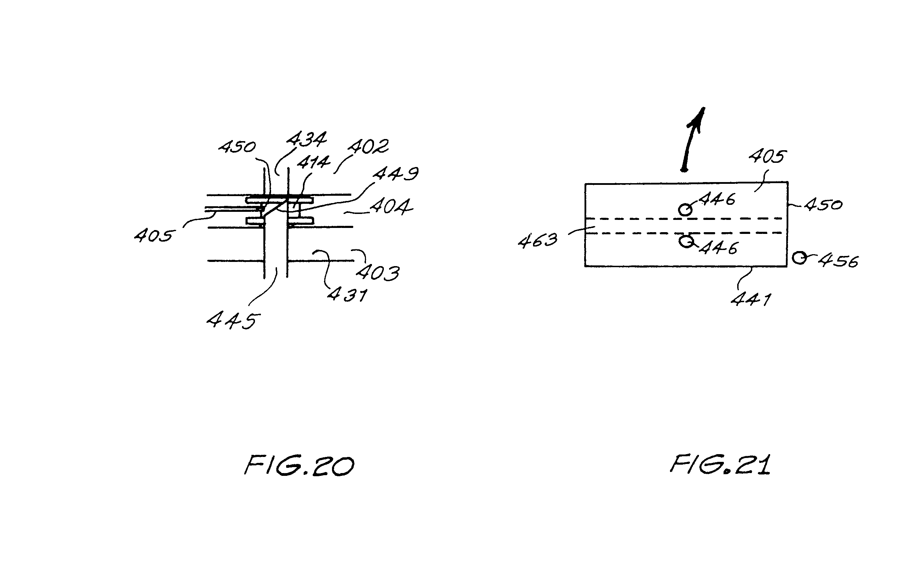

As shown in Figures 16 to 19, a ticket validation mechanism 401 including handling apparatus according to the invention has two members 402 and 403 of substantially plate form, which are each profiled on one face so that when the members are positioned with their profiled faces directed towards each other, the profiles of these faces together define a narrow passage 404 of substantially rectangular section through which a ticket 405 (Figure 21) can be transported to be checked for validity. Preferably the members 402 and 403 are secured together to form

-59-

a unitary structure for mounting in a ticket barrier or the like. Considering the mechanism in broad terms, the passage 404 has a ticket reception region 406 in which a ticket to be checked is received from ticket entry means 407 associated with the mechanism, and the ticket is picked up in the reception region by ticket transport means 408 to be carried from the reception region to a ticket return region 409 of the mechanism. The mechanism 401 is also provided with ticket reading and coding means comprising a plurality of magnetic heads for operating on a magnetic stripe on a ticket, and signals generated from data detected by the ticket reading means may be used to determine whether a ticket is returned to the user or "swallowed" within apparatus, such as a ticket barrier, associated with the validation mechanism.

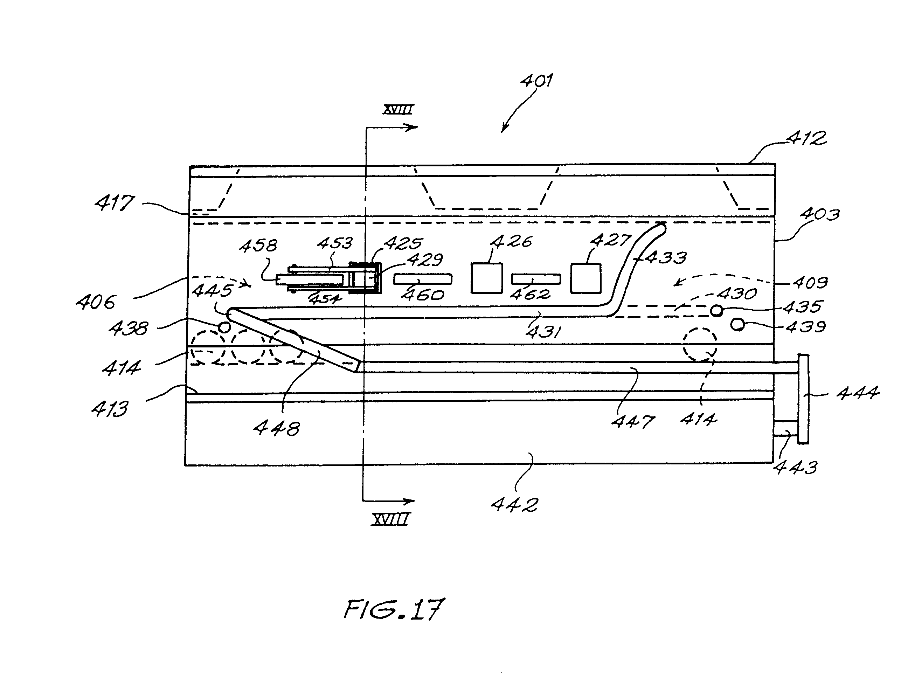

Each member 402 and 403 is moulded from plastics material and is secured to two aluminium angle members, 410, 411, 412 and 413 respectively, by means of which the validation mechanism may be mounted in associated apparatus such as a ticket barrier. In the bottom part of the passage 404 defined by the members 402 and 403, there is disposed a series of double-flanged rollers 414, for guiding and supporting the elongate lateral lower edge of a ticket to be advanced through the mechanism from the reception region to the return region, each roller being rotatably mounted on a pin 415 in a substantially friction-free manner. The ends of the pins are received in appropriately placed holes 416 in the walls of the members 402 and 403 defining the passage 404. The number of rollers provided depends on the length of the mechanism and, as mentioned below, the degree of support to be given to the ticket. Typically twenty rollers 414 may be included, but in certain circumstances, the spacing between rollers may be increased and a lesser number employed. In Figures 16 and 17 only some of the rollers 414 are shown, for clarity. The holes 416 may be formed during the moulding process for making the members and the rollers and pins placed in position before the two members are assembled together to form the validation mechanism 401. The members 402 and 403 may be glued together or otherwise fastened to each other in any suitable manner, to form a firm unitary construction.

The upper part of the passage 404 includes a further narrowed-in region 417 in which the width of the passage is reduced from that prevailing over the major part of its height, and the profiled faces of the members directed towards each other each include recessed portions 418, 419, 420 and 421 respectively located above region 417. Recess 418 in member 402 and recess 420 in member 403 together define a slot-shaped opening extending upwardly in the assembled mechanism from the top of the passage 404 in its narrowed-in region 417, and recesses 419 and 421 similarly define a similar slot. The passage-defining wall of each member 402 and 403 is also provided with holes 422, 423 and 424 (member 402) and 425, 426 and 427 (member 403) for receiving magnetic heads for reading or writing on a magnetic stripe on a ticket being checked. In the Figures, only magnetic heads 428 and 429 are shown in position in holes 422 and 425, for clarity, but it will be understood that in the complete mechanism, all holes would be so provided.

It is preferred that a validation mechanism should read coded data on a ticket being checked, re-write the data on the ticket again and then optionally re-read the re-encoded data, so as to ensure that it has been correctly rewritten. This would be the case in particular where at least some tickets are to be returned for further use or checks. Where all tickets are "swallowed", a simpler operation may suffice. The original data may also be erased between reading and recording, for which four pairs of magnetic heads would be necessary, but the required operations may also be satisfactorily carried out with three such pairs, as illustrated, or with just two in some instances, the check operation being eliminated. It will be understood that the exact number of pairs of heads provided is not of significance in regard to the invention, and will affect only the overall length of the mechanism. In practice, the reliability of electronic encoding is such that the check heads for re-reading re-encoded data may be omitted, which provides an advantageous additional economy in the construction of the apparatus.

Each passage-defining wall also includes a slot, 430 and 431 respectively, extending horizontally over the major part of the length of the respective member 402 or 403, and terminating at one end in a respective upwardly-directed slot portion 432 and 433. These slots are arranged to receive a ticket pick-up member of the transport means, but in the assembled mechanism, only one slot serves this function. In the mechanism shown in Figure 16, slot 431 is the functional slot. The passage-defining walls of the members also contain holes 434 and 435, each of which is disposed opposite the closed end of the horizontally-disposed portion of the slot 431 or 430 in the other member in the assembled mechanism, and holes 436, 437, 438 and 439, each of which is disposed somewhat below a said end or one of the holes 434 and 435 as appropriate and is displaced relative to the end or hole in question in the direction of ticket travel or advance. These holes are provided for the ticket return and disposal operations of the mechanism, as will be hereinafter described.

It will be clear from Figure 16 in particular, that the members 402 and 403 are identical, i.e. if member 403 is turned through 180⁰, it can replace, in all respects, member 402. Thus it will be evident that these plastics moulded parts can be produced from a single mould and that they are fully interchangeable. In this way, convenience and economy of manufacture and ease of assembly are features of the mechanism incorporating this embodiment of the invention, and these advantages outweigh any apparent redundancy in having features in each member not essential to its fulfilling its particular role in the mechanism. The magnetic heads may be moulded into the plastics material and each of the members 402 and 403 may form a complete disposable unit, including the heads. The plate members 402 and 403 may also be mirror images of each other, in an alternative embodiment, not illustrated.

A ticket of subsequently rectangular shape requiring to be checked is inserted in a vertical disposition and lengthwise into the slot 440 of the ticket entry means 407 associated with the validation mechanism. The actual orientation of the ticket required, i.e. which edge is leading and which face is directed towards the user, depends on the construction of the apparatus and it can be inserted in any of the four orientations possible, as described hereinafter, where the arrangement of the heads and their ancillary equipment so permits. Guide rails (not shown) may be provided to ensure that a crumpled ticket is smoothed out, and to control the lateral position of the opposed faces of the ticket so that it can run in onto the carrying rollers 414 in the ticket reception region of the mechanism with its lower edge 441 (Figure 21) located on the surfaces of the rollers between the flanges of the rollers. The ticket transport means 408 of the mechanism consists of a pneumatic cylinder 442 mounted beneath the plate members 402 and 403 of the validation mechanism and a ram 443 movable relative to the cylinder. A bracket 444 extends laterally from the end of the ram 443 and carries a resilient linkage terminating in a pick-up pin 445 for edge engagement against the material of the ticket in one of two holes 446 in a ticket received in the reception region, to carry the ticket through the mechanism. The ram extends forwardly from the leading end of the cylinder, the rear end of the mechanism being considered as that at which the ticket entry means is located. The linkage includes an elongate rod member 447 extending rearwardly from the bracket 444, towards the ticket entry means, and a second rod member 448, pivotably connected or otherwise articulated to rod 447 at the rear end thereof. The rear end of member 448 forms the pin 445. In the embodiment shown, the linkage rod member 448 is arranged to extend upwardly and rearwardly from its pivotal or articulated connection at the rear end of rod member 447, but it will be clear that the transport means may differ in detail from this arrangement, or indeed, that alternative transport means may be provided within the scope of the invention.

In this embodiment of the invention, the edge engagement of the ticket drive member in the form of pin 445 against the edge portion of the ticket defined by a part of the periphery of one of the holes 446 passing through the ticket in a central region takes place over a relatively small area of the ticket material which is insufficient to provide the positive control of ticket disposition relative to its direction of advance achieved by the engagement of the driving face of the transverse drive member of the embodiments previously described against the ticket over the greater part of the rear edge of the ticket. Accordingly, in the present embodiment, it order to control and guide the ticket during its forward movement and thereby inhibit lateral displacement or slewing, the rollers 414 define a notional surface controlling the location of the lower edge of a ticket passing through the mechanism, as also hereinafter further described, and the spacing between this notional surface and the pick-up pin 445 and the spacing between the elongate lateral edge of the ticket and the hole 446 to be engaged are substantially identical to ensure reliable pick-up of the ticket. It will be seen that a single central hole could be provided in the ticket, with appropriate roller to pin spacing, but two holes are preferred so that the magnetic coating or stripe may occupy the central region of the ticket, pin 445 engaging in the lower of the two holes in the inserted configuration of the ticket in the arrangement illustrated.

The pin 445 is arranged to run within the slot 431 and slot portion 433 of member 403 in the assembled mechanism, and means may be provided to ensure that it is retained therewithin during its movement. The transport means also includes a control system of a kind suitable for use with a pneumatic drive cylinder and adapted to regulate the movement of the pin from the end of the horizontally disposed slot 431 where it picks up a ticket 405 in the reception region to the ticket return region of the mechanism and the subsequent return of the pin along the slot to pick up another ticket in the reception region.

Figure 20 shows the arrangement by which the drive face of the drive member or pin engages in one of the holes 446 (Figure 21) in a ticket in greater detail. The end of the pin is oblique or inclined in a direction away from the direction of arrival of the ticket at the pin, this inclination or slope being indicated at 449, and the pin itself is resiliently displaceable to the side, i.e. outwards of the passage 404. The leading edge 450 of a ticket being inserted into the mechanism urges the pin sideways and outwards, and the nose of the pin bears against the surface of the ticket as insertion continues, until the pin snaps back into place under spring action when the hole 446 comes into alignment with the pin. The ticket is then engaged on the pin and is ready to be transported through the mechanism.

The spring force urging the pin 445 into engagement with the hole 446 may be provided by the resilience of the linkage or by additional spring means and associated pin guide means may also optionally be provided. The passage 404 is so dimensioned and the rollers 414 so positioned that a ticket becomes correctly placed for satisfactory engagement of pin and hole as it is received in the reception region. Means such as a micro-switch are provided to detect when the pin 445 has engaged in the hole in a ticket and may be located for example in hole 434 of member 402, when the pin 445 runs in slot 431 of member 403. A suitable form of micro-switch is of the optical type, detecting the presence or absence of the pin by the reflection or interruption of a light beam.

The micro-switch or other means is arranged to trigger the operating or control system of the cylinder 442, so that ram 443 will move forwards to draw a ticket engaged by pin 445 through the mechanism by means of the linkage 447, 448 and pin 445. In addition to pulling the ticket forwards, the linkage is also arranged to weight it downwardly to some extent onto the rollers 414, so that its lower edge 441 will run along a notional edge or surface defined by tangents to the carrying surfaces of the rollers. Thus the position of a ticket in transit through the mechanism is controlled so that the magnetic stripe 463 (Figure 21) of the ticket will be in registration with the magnetic heads of the mechanism. The notional edge or surface defined by the rollers 414 controls the disposition of the ticket during its movement through the mechanism by inhibiting displacement of its lateral edge relative to this notional surface rather than by the arrangement employed in the embodiments of the invention previously described, where the lateral position of the elongate side of the ticket is determined by the engagement or abutment of the drive member drive face against a transverse rear edge of the ticket which is at right angles to the elongate edge. Thus in the first embodiment, the position of the lateral edge is controlled indirectly while in the present embodiment, the position of the elongate lateral edge is

0145476

-66-

determined directly by engagement of this edge against the rollers 414.

As already mentioned, only two of the magnetic heads, namely 428 and 429 are shown. These are mounted on spring links 451, 452, 453 and 454 respectively, arranged so that the heads 428 and 429 are urged towards each other and press against the outside surfaces of a ticket passing between them. The spring links are mounted on lugs 458 and 458 respectively on the outer sides of the plate members 402 and 403, and are connected to lugs 464 and 465 extending from the rear of the heads 428 and 429. Lugs 459, 460, 461 and 462 correspond to lugs 457 and 458 for holes 423, 426, 424 and 427 respectively.

As described above, the ticket may be weighted against the rollers 414 during its transit of the mechanism, but it will be seen that the function of the rollers may also be a guiding one only and that the support of the ticket during transport may be undertaken by the pick-up pin alone. In this circumstance, the rollers would serve only to prevent rotation or slewing of the ticket within the plane which it defines during its movement. Alternatively, the guide rollers could be entirely omitted and alternative means provided to maintain the ticket in its correct orientation and alignment during its movement through the passage, so that the magnetic heads may operate on the magnetic material.

It is another feature of the present mechanism incorporating ticket handling apparatus according to the invention that it can receive and handle a ticket in any of the four orientations possible when the magnetic heads and their ancillary equipment are appropriately adapted in a manner known in the art. Thus two holes 446 are provided in the ticket, so that it is immaterial which way it is inserted into the ticket entry means and the pin 445 can always engage an appropriately placed hole.

As a ticket traverses the region of the mechanism including the magnetic heads, the heads read coded information carried on it, perform the appropriate associated operations in accordance with the information detected or read, such as unlocking barriers and the like, and rewrite the ticket as necessary. Following this the ticket is carried forward into the return region, where a variety of arrangements and operations are possible. As shown in Figure 19, a solenoid 455 is mounted on the outer side of member 402. A blocking pin 456 is movable by the solenoid inwards into the passage through hole 437 and then across the passage, to blockade it a little way above the notional control surface or edge defined by the carrying surfaces of rollers 414. Optionally it may enter into hole 439 in the member 403.

This pin is horizontal when arranged to blockade passage 404 so that the front edge of a ticket 405 moving into the return region will come against it as the pick-up pin 445 reaches the end of slot 431 and engage the pin 456 at a location on the front edge of the ticket displaced from the central longitudinal axis of the ticket. As the ram 443 continues to move forwardly, pick-up or drive pin 445 will move upwardly and forwardly along slot portion 433, due to the pivotal connection between rod members 447 and 448. As further forward progress of the ticket is prevented by blocking pin 456, the ticket will then pivot upwards as indicated by the arrow in Figure 21 and part of it will emerge from the slot defined by recesses 419 and 421 in the top of the mechanism for retrieval by the passenger. Means are provided to release the pin 445 from the ticket at this time, and allow it to return to pick up another ticket, and this operation may also be controlled by microswitches. Means may also be provided to nip a ticket lightly in the return slot and hold it prior to the user picking it up. Preferably the pick-up pin is not restored to its initial pick-up position until the ticket being returned has been collected by the user, to prevent a second operation being initiated before the first is completed, but it will be seen that the tapered end profile of the pin 445 will enable it ride over a further ticket inserted into the reception region before the pick-up pin has returned to its starting or pick-up position, during the return movement of the pin.

It will be appreciated that if all tickets checked are to be returned, then the pin 456 may remain permanently in its blockading position and each ticket brought forward by the transport means will be pivoted upwards to be returned to the user. However, solenoid 455 may be activated only when a particular type of ticket is detected by the reading heads, to withdraw or insert pin 456 as required. When blocking pin 456 is withdrawn, ticket 405 can tilt downwardly on reaching the return region and on release from pin 445, will fall away into a ticket collection region or other disposal unit within the barrier or other apparatus and will thus be "swallowed". Alternatively the movement of the transport means in this region may be arranged to direct the ticket more positively towards the collection region, or additional means may be provided to take it to the collection region or to some suitable receptacle on release by the pick-up pin.

A number of advantages attach to the present arrangement of ticket validation mechanism incorporating ticket handling apparatus according to the invention. In particular, the use of a notional edge defined by the carrying surfaces of rollers 414 to control ticket registration with the pick-up member of the transport means and during transport through the mechanism and against which the lower edge of a ticket being validated or checked abuts and is preferably held by the weight of the linkage of the transport means, represents a simplification as compared with arrangements in which the ticket moves in a horizontal disposition and is advanced by being gripped between

0145476

-69-

drive belts. A single moulded member, easily made up in plastics, may serve to define both halves or walls of the passage and is economically produced and easily interchangeable. The use of a pneumatic drive allows the velocity of movement of the ticket past the magnetic heads to be more nearly constant than would be the case with an electrically driven transport device, in that the accelerating and decelerating phases of a cycle of movement are completed in a lesser distance than would normally be practicable with electric drive.

Thus in this embodiment of apparatus according to the invention, there is no support face for the side of the ticket opposite to that engaged by the magnetic head, but instead individual magnetic heads are provided on each side of the passage through which the ticket travels during its transit of the apparatus or mechanism. The resilient mounting of the magnetic heads by means of the spring links ensures that the heads are urged against magnetic material or a magnetic stripe on a ticket passing between the heads. Initial adjustment of the heads is such that the gap between them is very small so that the heads have to be moved apart by the arrival of a ticket and the spring force is sufficient to ensure that they remain in contact with the magnetic surface under substantially all conditions during the passage of the ticket, even when the ticket passing them has been crumpled or otherwise damaged.

Thus in the present embodiment, the "controlled magnetics" feature of uniform forward advance of the magnetic stripe of a ticket over the magnetic heads of the apparatus without any significant lateral displacement of the stripe relative to the heads is brought about by the edge engagement of the driving face of the drive pin in a hole in the ticket in conjunction with engagement of a lateral longitudinal edge of the ticket against a control plane defined by the rollers. In contrast in the earlier embodiments described, the two functions of forward drive of the ticket and prevention of lateral displacement or slewing are combined by engagement of the transverse drive face of a drive member against the rear transverse edge of the ticket, this edge being substantially at right angles to the direction of advance of the ticket. Accordingly in these constructions, it is not necessary to provide any independent additional control on the elongate lateral edge of the ticket. In all of the embodiments described, the magnetic stripe of the ticket moves across the magnetic heads in a forward direction only without any relative lateral displacement between the heads and stripe which would lead to cross-reading between successive coded portions of the stripe.

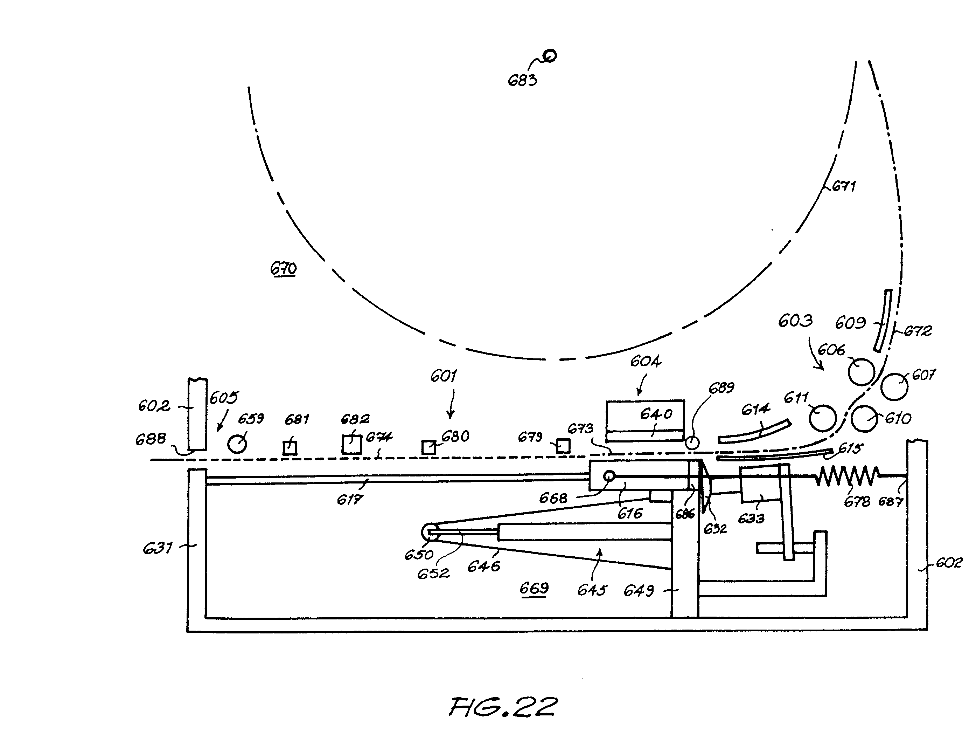

Figure 22 shows schematically a ticket-issuing machine 601 incorporating ticket handling apparatus in which tickets are provided in roll rather than stack form. The apparatus according to the invention is accommodated in a lower region 669 of a housing or cabinet 602, in the upper region 670 of which a large roll 671 of paper or card 672, which may typically be 43cm. (17 inches) in diameter, is received. The paper or card roll 671 is rotatably mounted in conventional manner, as indicated at 683 in Figure 22. A free end of the paper or card roll 671 is brought downwardly along the right hand side of the cabinet or housing 602 as viewed in Figure 22, the path of the web being indicated by a chain-dotted line, and the free end is fed into the apparatus of the invention, for the issue of tickets from the paper or card stock.

The issue of a ticket from the paper or card stock takes place in four main stages, the first of these being a web advancing stage, in which drive means 603 advances a leading end portion of the web 672 to an input registration station 604 of the apparatus. The second stage of ticket production takes place at the registration station 604, where a predetermined length of the leading end portion of the web 672 is detached from the remainder of the web to define a ticket 673, indicated by the leading end of chain-dotted line 672, and at the same time, fixed information is printed on it. In the third stage of ticket issue, there is a further printing operation together with a simultaneous encoding operation, the ticket 673 being transported from the registration station to an output station 605 of the apparatus. In the course of its transfer between these stations along the path indicated by the hatched line 674 in Figure 22, variable information is encoded on a region of the ticket provided with magnetic material and is printed on the web surface of the ticket in visible form. At the output station 605, the fourth stage of ticket issue takes place, in which the ticket is advanced from the apparatus for transfer to a purchaser or other apparatus as the case may be. The features of the apparatus by which each of these stages of ticket production is carried out will now be described.

The ticket advancing means 603 has two pinch rollers 606 and 607, roller 606 of which is driven by an A.C. electric motor, for engaging the leading end portion of the web guided downwardly from the roll by a curved plate 609 and advancing it towards the registration station 604. Roller 607 is rotatably mounted in blocks, slidable in horn guides in a plate or frame which carries the rollers and roller drive motor. Roller 607 is thus displaceable in a direction towards and away from roller 606 and is urged towards roller 606 by spring means (not illustrated). Two additional rollers 610 and 611 are mounted on the plate or frame, for straightening the web coming off the roll stock and removing the curvature from it which results from its roll storage form. One of these rollers 610 is adjustable by means of a setting screw in a direction substantially perpendicular to the plane of advance of the web, so that the degree of straightening can be varied by movement of this roller towards and away from the path of the web. On leaving the second straightening roller 610, the paper or card is guided on its way to the registration station 604 of the apparatus by further profiled upper and lower guide plates 614 and 615.

At the registration station 604 of the apparatus 601, the leading web portion is received on a slidably mounted carriage 616 of transport means of the apparatus 601. The carriage 616 is mounted on substantially cylindrical rods 617 or longitudinal members extending along the length of the apparatus, substantially in the direction of advance of the web into the registration station 604, between an output end structure portion 631 of the apparatus and a transverse carriage travel stop member at the right hand end of the apparatus in the registration station region. The carriage 616 is displaceable between the registration station 604 and the output station 605 of the apparatus by means subsequently described herein. The web arriving at the registration station is guided by lateral guide members disposed on the upper face of the carriage and extending along the sides of its upper surface region. The guide members define respective inwardly directed grooves for engaging the sides of the advancing web as it enters the registration station 604. The web portion is thus brought into close proximity to the upper surface of the carriage. Further advancing movement of the web may be terminated by abutment of its front edge against a web stop, mounted on a lever itself pivotable on the carriage 616 about a transverse shaft or pin and urged towards a position in which the web stop blocks further forward movement of the web from the registration station 604 by a spring received in a bore within a lower portion of the carriage 616. Alternatively web advance may be terminated by a detector means, e.g. light-activated, which stops the web advance drive motor when activated by proximity or arrival of the leading edge of the web.

Severance of the web material portion defining a ticket at the registration station 604 takes place by means of a rotating circular knife 632, which is driven by an electric motor 633, for example, through a belt and pulley drive. The knife and its drive assembly are mounted on an arm transversely displaceable into and out of the path of the web, a transverse movement of the knife 632 through the web path while the knife is rotating serving to cut through the web portion and detach the ticket-defining part of it from the remainder of the web. Transverse displacement of the self-sharpening rotating knife 632 is effected by means of a pneumatic piston and cylinder device, the piston rod of which is operatively connected by a crank arm to a shaft for pivoting the knife and its drive assembly in a plane or direction substantially transverse to the path of advance of the web.

The cut-off ticket is accommodated on and advanced by the carriage 616 in a generally similar manner to that already described in relation to the embodiments of Figures 1 to 15.

When the knife has completed its transverse cutting stroke, the ticket is driven forward a short distance by a pinch roller 689 which presses the ticket downwards against the rear end region of the carriage 616. The roller 689 may be driven at all times, slipping on the ticket during before the knife completes its cutting stroke, or it may be controlled to be driven only after the severance of the ticket is finished. The ticket is advanced along the carriage a sufficient distance to enable the drive member 686, which is similar to the drive members of the embodiments of Figures 1 to 15, to move upwardly behind the ticket and engage the transverse rear edge of the ticket with its drive face. This movement of the drive member or ticket may be controlled by and phased in with the cutting movement of the knife by cam or other means. Alternatively the drive member 686 may be static, the ticket being merely driven forward until its rear edge drops down over a lip defined by the drive face of the drive member into its rest position on the carriage, ready for forward drive. Where the ticket has initially abutted against a physical stop at the leading edge of the carriage to terminate web advance, forward drive of the roller 689 is linked with drive means to displace this stop out of the path of the ticket as it is advanced on the carriage. Where web advance has been terminated by a light-responsive detector, advance of the ticket on the carriage is not thus impeded, but a physical stop may nonetheless be provided, in the form already described, at the leading edge of the carriage, to prevent excessive forward movement of the ticket under the action of pinch roller 689. The ticket will then be received between this forward stop and the transverse driving face of drive member 686 during ticket advance.

Printing of fixed information on a ticket at the registration station 604 is carried out by means of a printing block 640 formed of ink-retentive material secured to a backing plate which is moved towards and away from the ticket on the carriage 616 by a pneumatic device. Return movement of the ink-retentive block is achieved by a spring which acts to urge block 640 upwardly away from the web. The ink-retentive material allows a large number of tickets to be printed without any need for inking means or devices, and it can readily be replaced when the quality of print begins to deteriorate to a noticeable degree.

Displacement of the carriage 616 of the ticket transport means from the registration station 604 to the ticket output station 605 is effected by means of a pneumatic ram 645, which is coupled to the carriage by means of a cable and pulley arrangement. The cable 646 is secured at one end to the lower side of the carriage 616 and at the other end to a fixed member 649 of the apparatus 601, and between these ends it passes over a pulley 650 mounted on the piston rod of the ram. The cylinder of the ram is also mounted on the fixed member 649 of the apparatus. This member thus supports these items in addition to supporting the upstream ends of the rods 617 and the rotatable shaft for the pivoting support arm for the severing means. It will be clear from Figure 22 that on activation of the pneumatic ram 645, the piston rod 652 moves to the left, and the coupling arrangement comprising the cable 646 and pulley 650 causes the carriage 616 to thereby move through twice the distance traversed by the ram and pulley, thus magnifying the stroke of the piston. A suitable stroke for the ram is 11.5 cm (4½ inches) and the carriage travel is then 23 cm (9 inches). This arrangement provides for the forward movement of the carriage 616 from the registration station 604 to the ticket output station 605, and return movement is taken care of by a spring, indicated by item 678 in Figure 22, and mounted between a pin on the side of the slidable carriage 616 and an attachment point indicated by 687 provided on the structure 602 below the paper entry path at the upstream end of the apparatus. Accordingly to advance the carriage 616 from the registration station 604 to the output station 605, the ram 645 is activated to overcome the force of spring 678, and at the output station 605 the air pressure to the ram is relieved, so that the spring 678 returns the carriage to the registration station 604. Other resilient return force means may be provided as an alternative to spring 678.

Drive member 686 has a drive face for engaging an edge portion of the ticket as already described in relation to earlier embodiments of the invention. This drive face extends substantially transverse to the direction of advance of the ticket over at least a part of its area and is arranged to come into operation against the transverse rear edge of a ticket after the cutting operation is complete. Alternatively the drive member may be in the form of a pin to engage in a hole in the ticket, which may be provided in the ticket stock or may be punched at the time of severing the ticket from the roll, in which event lateral guidance of the ticket is also required, as in the embodiment of Figures 16 to 21.

The path of the carriage between the registration and output stations is determined by the guide rails 617, and above this path there is provided a plate member having apertures housing transducers 679, 680 and 681 for transferring data in electronically coded form to and/or from magnetic material on the ticket. This material may suitably be in the form of a 6 mm wide magnetic stripe on the web surface of the ticket. The first 679 of these heads erases any stray information inadvertently to be found on the magnetic material, the second head 680 encodes the data relating to the variable information for that particular ticket, for example, details of fare paid, date of issue, time of issue, origin, destination and so on, while the third transducer 681 reads the data encoded as a check operation. This data is then compared, using microprocessor means, with the data originally coded by transducer 679. Needle printers 682 are mounted in further apertures in the plate member to write the same variable information in visible form on the web surface of the ticket. By virtue of the pneumatic drive of the carriage of the ticket transport means, the accelerative and decelerative phases of carriage movement are short, and the constant-speed phase of this movement extends over the greater part of the distance traversed between the registration and ticket output stations. Accordingly it is possible to encode the data on the ticket twice, the second encoding taking place in the reverse direction from that of the first encoding. In this way a ticket is produced which can be inserted in a ticket validation or other ticket reading device in either direction. It will be clear therefore that the apparatus of the invention provides for a high density of encoding on the ticket, for example, up to two hundred bytes per linear inch of the ticket magnetic material.

Head 679 may be replaced by a permanent magnet which cleans the magnetic stripe of any stray codings to be found on it as it arrives from the web. In addition the read or check head 681 may be eliminated in the majority of installations since the reliability of magnetic coding is now such that very few tickets are coded incorrectly, the number of "bad" tickets being so small as to hardly justify this inspection or monitoring function being carried as a matter of routine.

At the output station 605 of the apparatus, a pinch roller 659 is provided which is driven by an electric motor through a belt and pulley arrangement to advance the ticket, when printed and encoded, from the carriage 616 to an output slot 688 of the apparatus 601. The pinch roller 659 presses on the upward face of the ticket, and the lower face of the ticket slides over a leading portion of the carriage 616, while the side regions of the tickets run on free rollers. To allow the ticket to move forward from the carriage, the lever carrying the web stop (where provided) which abuts the front end of the ticket may be rotated by abutment of an abutment face of the lever against an abutment face provided on a member mounted on the framework or structural portion 631 of the apparatus, such abutment occurring as the carriage 616 approaches the end of its movement from the registration station 604 to the output station 605.

The apparatus of the invention also comprises control means in the form of electronic integrated circuits, for activating the various drive means and pneumatic valves and rams at appropriate stages in an operating cycle, in the correct operating sequence. The electronic control means is not illustrated in the drawings but being compact in form, may be accomodated at any suitable location within the apparatus. Associated with the control means are various detecting means, such as a transducer for detecting the presence of the carriage at the registration station. The functioning of the control means and its relationship with the various detecting features of the apparatus will become clear in the course of the following description of an operating cycle of the apparatus.

At the start of the operating cycle, the leading end of the web is adjacent to the rear or upstream end of the carriage 616, considered with respect of the direction of advance of the web. The web advancing drive 603 is inoperative, so that the web remains stationary in this configuration. The carriage detecting transducer means detects the presence of the carriage 616 at the registration station 604, so that when the apparatus 601 is activated, for example on receipt of a command signal from an intending purchaser of a ticket or from a clerk operating a desk-top type unit, an operating cycle may commence.

The cycle commences by operation of the pinch roller drive motor to drive the web forward so that its leading end portion enters the registration station 604. The side edges of the web are held and guided by the grooves of the lateral guide members and when the leading end of the web abuts the web stop at the front end of the carriage 616 or on detection of the arrival of its front edge at the leading end region of the carriage by suitable detector means, drive of the pinch rollers is terminated. On confirmation that the web portion is in fact present in the registration station 604, which may be achieved by suitable detection means, the rotary knife 632, which is normally maintained in rotation both during and between operational cycles, is traversed across the web so that it severs the leading end portion of the web from the remainder of the web, and this leading end portion then defines a ticket.

During the severing operation, a pneumatic device is operated to press the ink-retentive pad 640 against the ticket supported on the carriage 616, so that the fixed information required to be printed on the ticket is transferred to it while the ticket is physically retained on the carriage 616. Suitable detection means such as micro-switches or the like record the start and finish of each of these operations and supply appropriate signals to the control system of the apparatus so that subsequent operations are initiated in due sequence. After severing, the cut-off ticket is driven a short distance forward by roller 689 to enable its rear edge to be engaged by the transverse drive member 686, as already described. On completion of the this short forward movement, the ticket may abut a stop at the leading end of the carriage 616 if required.

The carriage 616 on which the ticket is retained is then driven forwardly by the pneumatic ram 645 to transfer the ticket from the registration station 604 to the output station 605 of the apparatus. The operation of the ram 645 and the linkage coupling it to the carriage will be clear from the drawing and the preceding description. Throughout the transport movement of the ticket, the ticket remains on the upper surface of the carriage 616, and is driven forward by engagement of the drive face against an edge portion of the ticket. It passes underneath the transducer heads by which the electronically encoded variable ticket information is transferred to the magnetic material of the ticket. In the course of this movement, printing of the variable information on the web surface of the ticket also takes place, as required. Initiation of coding and needle printer operation is triggered by advance of the carriage 616.

0145476

-80-

As the carriage 616 approaches the end of its travel, the web stop where provided is moved downwardly to clear the front end of the ticket and the ticket is freed for further movement from the carriage. The pinch roller 659 at the output end of the apparatus is then either activated or in the event that it runs continuously, engages the leading end of the ticket, to advance the ticket from the carriage towards the output slot 688 of the apparatus, where it may be transferred to a purchaser or to other apparatus, for example a conveyor, for further handling. A further pair of pinch or drive rollers may be provided downstream of roller 659 to ensure reliable advance of the ticket from the roller 659 to the output slot 688.

Movement of the ticket from the carriage 616 is detected by suitable means, and the carriage, which is now free of the ticket, is returned to the registration station 604 by the spring or resilient means 678 on release of the pressurised air from the ram 645. Its arrival at registration station 604 is detected by a further transducer and notified to the control means, so that the apparatus may be restored to its starting condition once again. On receipt of a further activating signal, a new operating cycle may then commence.

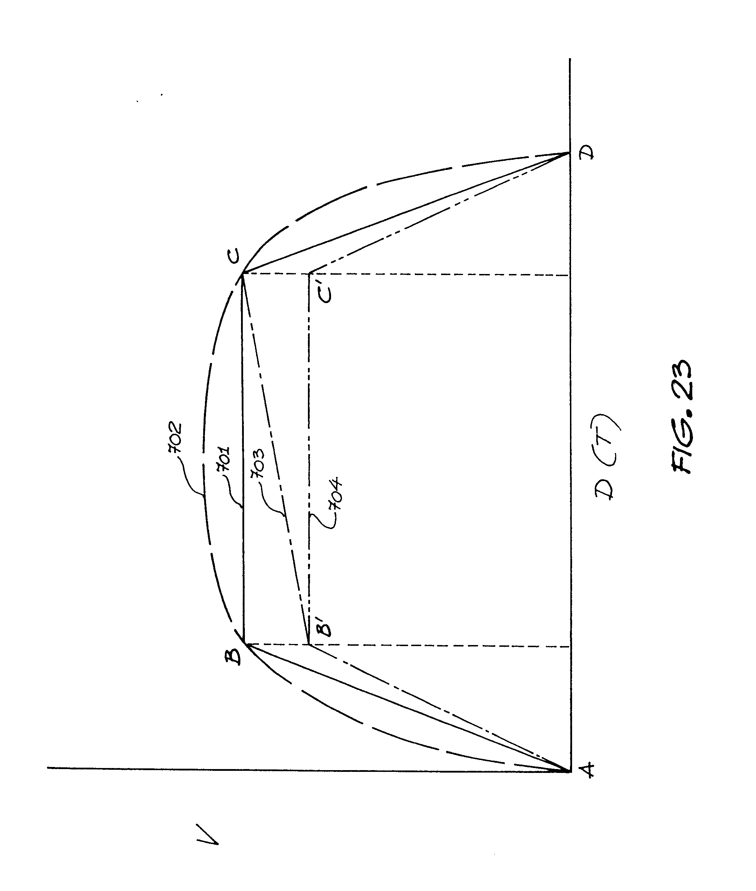

Figure 23 is a graphical representation of motor speed against distance travelled (or time of travel) for various different types of drive for apparatus of the invention. "V" plotted on the vertical axis represents speed, while "D" (or "T") plotted on the horizontal axis, represents distance (or time). In Figure 23, curve 701 is an idealised representation of a speed/distance or speed/time plot for an air motor, whether a roller motor or a piston and cylinder device. From A to B, acceleration takes place, while the motor is slowing down from C to D as it finishes its stroke or movement. However between B and C, its speed is substantially constant, and the distance B-C represents approximately 4 to 7 inches of the 15 inch movement or stroke of a typical air motor device for the apparatus of the invention. Between A and B, the effects of so-called "stiction", i.e. retardation resulting from binding of seals against the walls of the cylinder in a ram device, may become apparent in a degree of lag or extra force required to reach the constant speed portion of the movement.

Curve 702 represents the speed/distance characteristic obtainable with an electric motor, and it will be seen that the speed in the B to C section of this curve is not uniform but that there is a slight acceleration during the first part of this portion of the travel followed by a subsequent slow-down as point C is approached.

Curve 703 shows the practical shape of curve achieved with many air motors, the stiction effect being apparent in the lesser speed attained at point B' on completion of the initial high acceleration phase. It is found that a small accelerative effect continues throughout the nominally constant speed portion of the movement between points B' and C, so that the speed is not precisely uniform during this phase of motor operation. In the case of the roller motor in particular this effect may be largely overcome by providing a restrictor in the path of the air flowing out of that compartment against which the rollers of the motor are advancing and which is being reduced in volume by the pinching action of the rollers. In this way curve 703 may be modified to achieve curve 704, where the accelerating phase B'-C is replaced by the constant speed portion B'-C', albeit with a lower average speed over this region of the motor travel.

By the use of a pneumatic motor in the apparatus of the invention, an increased degree of coding of a ticket may be employed or achieved, in that coding and reading is are facilitated by being carried out during the uniform speed portion of the motor movement. Thus the ticket to be read may carry more bytes of information than has been customary while tickets to be coded may have an enhanced number of discrete bytes applied to them. In addition, an increase in byte density may be achieved. However, by virtue of the matching of processor operations to the actual speed of passage of a ticket to be coded or read by the apparatus, as previously described, use of the apparatus of the invention with motors other than air motors is also practicable, and electric drive in particular may also be employed.

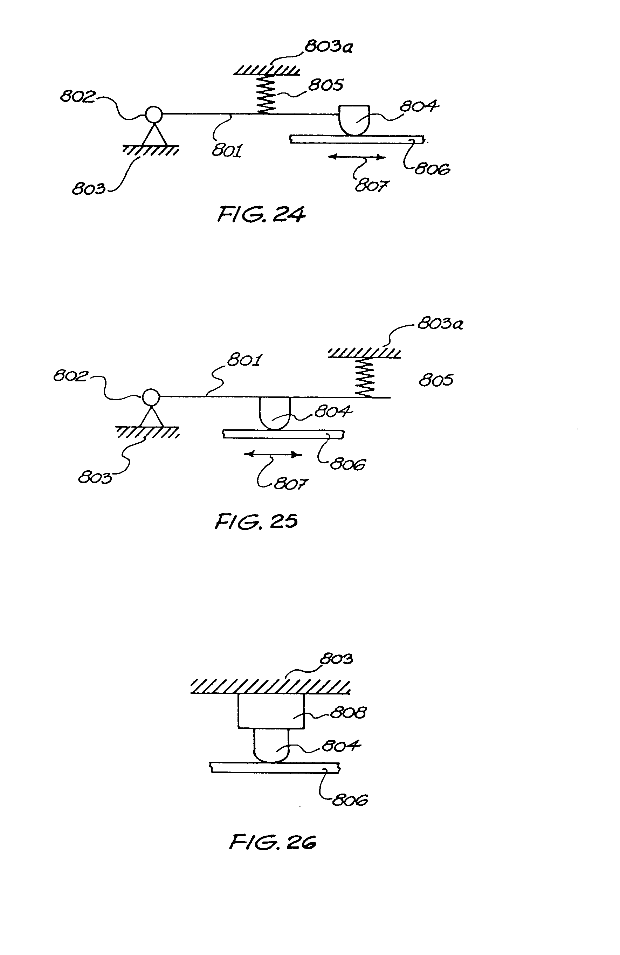

Figures 24 to 29 show a number of alternative arrangements for biassing a magnetic head to urge it into a data transfer relationship by engagement against a ticket in apparatus according to the invention. The arrangements shown are schematic or diagrammatic and similar numerals are used for similar items in each drawing. As shown in Figure 24, a lever arm 801 pivots about a point 802 associated fixedly with a fixed member 803 of a ticket handling apparatus. Head 804 is disposed at the free end of the lever and is urged against the magnetic region of a ticket 806 moving in either of the directions indicated by arrows 807 by the action of a compression spring 805, which acts against the lever arm 801 intermediate the head 804 and the pivot 802. One end of compression spring 805 presses against the lever arm while the other end is restrained by a further fixed portion 803a of the apparatus.

The arrangement of Figure 25 is generally similar, but the head 804 is located intermediate the free end of the lever and the end which is pivoted to fixed member 803. The spring 805 acts on the free end of the lever, so that the balance of forces differs somewhat from that of Figure 24.

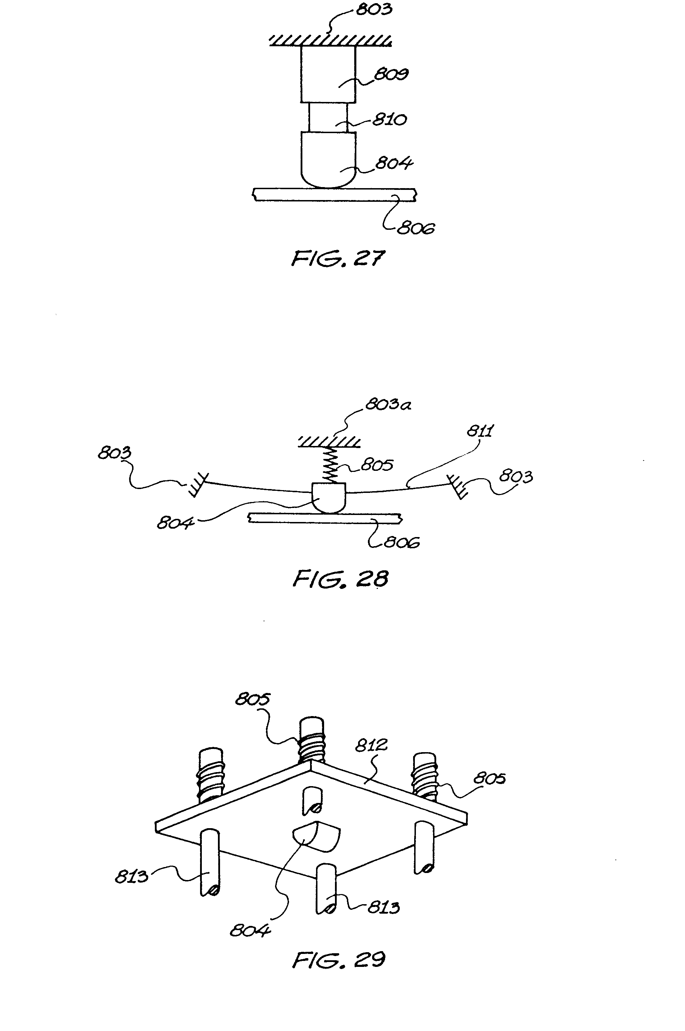

In the arrangement of Figure 26, the head 804 is backed by a rubber block 808, which is secured to the fixed member 803. Other resilient material may also be substituted for the rubber. In the somewhat similar arrangement of Figure 27, the rubber block is substituted by a piston and cylinder device, in which piston 810 is advanced from cylinder 809 by air pressure or hydraulic pressure or by any other spring force means.

In the arrangement of Figure 28, the head 804 is mounted at the mid-point of a flexible beam 811, and is urged against ticket 806 by spring 805.

It will be appreciated that the various arrangements shown are exemplary only and that diverse further possibilities are available for urging the magnetic head into data transfer relationship with a ticket moving past it in ticket handling apparatus. In any of the arrangements shown, coil springs acting about the axis of pivoting may be substituted for the springs indicated diagramatically by reference 805 as compression springs. Similarly tension springs may be substituted for the compression springs and alternative forms of torsional urging means acting about the axis of pivoting may optionally also be used.

A further mounting arrangement for head 804 is shown in Figure 29, in which the head is located substantially centrally of a planar plate member 812, which is guided for translational displacement perpendicular to its own plane by guide pillars 813. Compression coil springs 805 mounted about pillars 813 are arranged to urge plate 812 downwardly in the arrangement of Figure 11, so as to urge head 804 into data transfer relationship with a ticket passing beneath it. As in the earlier arrangements, tension springs or other forms of springs may be substituted for the compression coil springs indicated in the drawing, while suitable reaction means for the fixed ends of the springs (not indicated in Figure 29) must also be provided in the practical contruction.

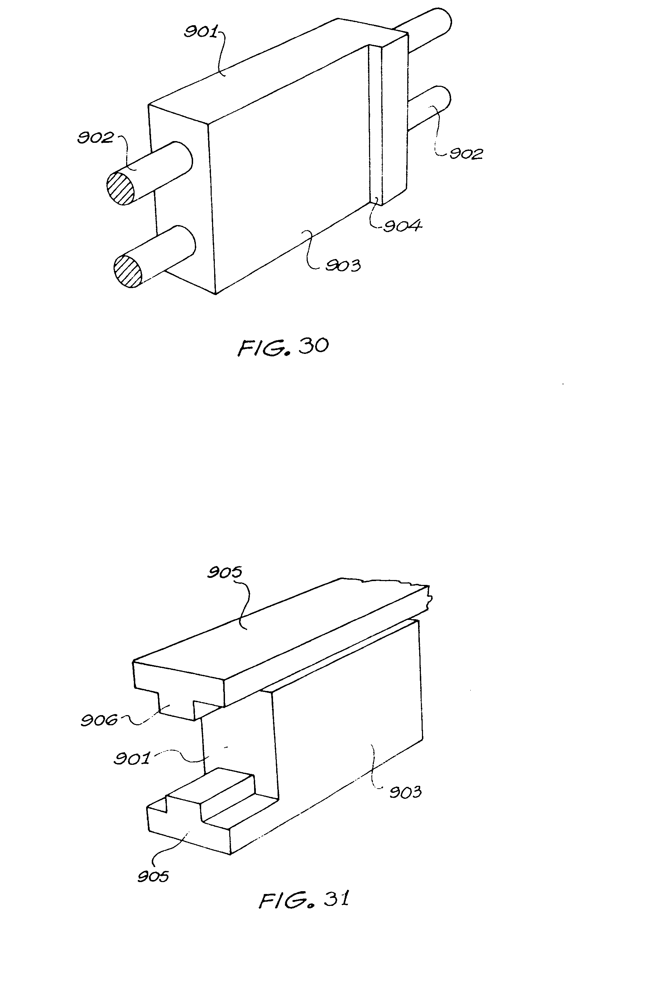

Figures 30, 31 and 32 show various methods of providing a guided ticket support surface translationally displaceable parallel to its own plane, to provide a backing surface against which the opposite face of a ticket from that engaged by a magnetic head resiliently mounted in accordance with the principles of the present invention, may be juxtaposed during coding or reading of the ticket. The arrangement shown in Figure 30 is a schematic representation of that illustrated in more detail in Figures 3, 4 and 10 in particular. The carriage 901 is translationally displaceable along circular cross-section guide bars 902, which are received through corresponding bushed openings in the carriage. The carriage has a front planar support face 903, against which one planar face of the ticket may be engaged. A drive face 904 at the rear edge of the carriage engages the rear edge face of the ticket to drive it forwards during advance through the apparatus.

The arrangement shown in Figure 31 is similar, but in this case guidance of the carriage is achieved by upper and lower slideways 905, each of which has a raised longitudinally extending central portion 906 of substantially rectangular cross-section engaging in a correspondingly profiled longitudinal recess of the carriage so that the carriage 901 is constrained to move in a linear manner similar to that achieved by the arrangement of Figure 30. This guidance and bearing arrangement is generally similar to that used for the slideways of machine tools.

In this instance the carriage 901 is depicted without a ticket drive face 904. Advance of the ticket may be achieved by means other than rear edge engagement by a transversely extending guide face. The ticket may for example be driven forward by engagement of its upper and/or lower longitudinal edge regions, and the planar face 903 may then serve simply to support the central region of the ticket against the force applied to the magnetic head to bring it into data transfer relationship with the face of the ticket opposite to that engaging the planar face during the transport operation.

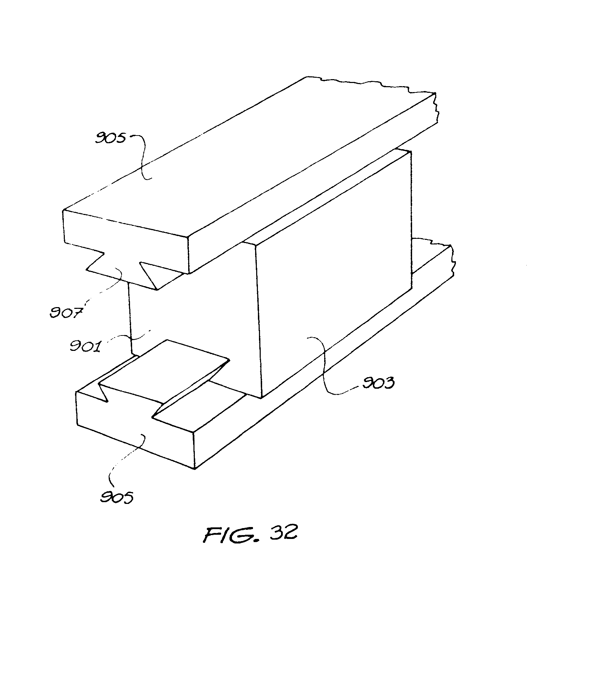

The arrangement shown in Figure 32 substantially resembles that of Figure 31, except that the raised central region 907 extending in the longitudinal direction of the slideways 905 is of a dovetail cross-section, mating with and engaging in corresponding dovetailed longitudinal slots in the upper and lower faces of carriage 901. In this case also, the carriage is again depicted as serving purely for ticket support purposes against the urging force applied to the magnetic head and travels with the ticket during its advance through the apparatus simply to provide this support, without fulfilling any drive function.

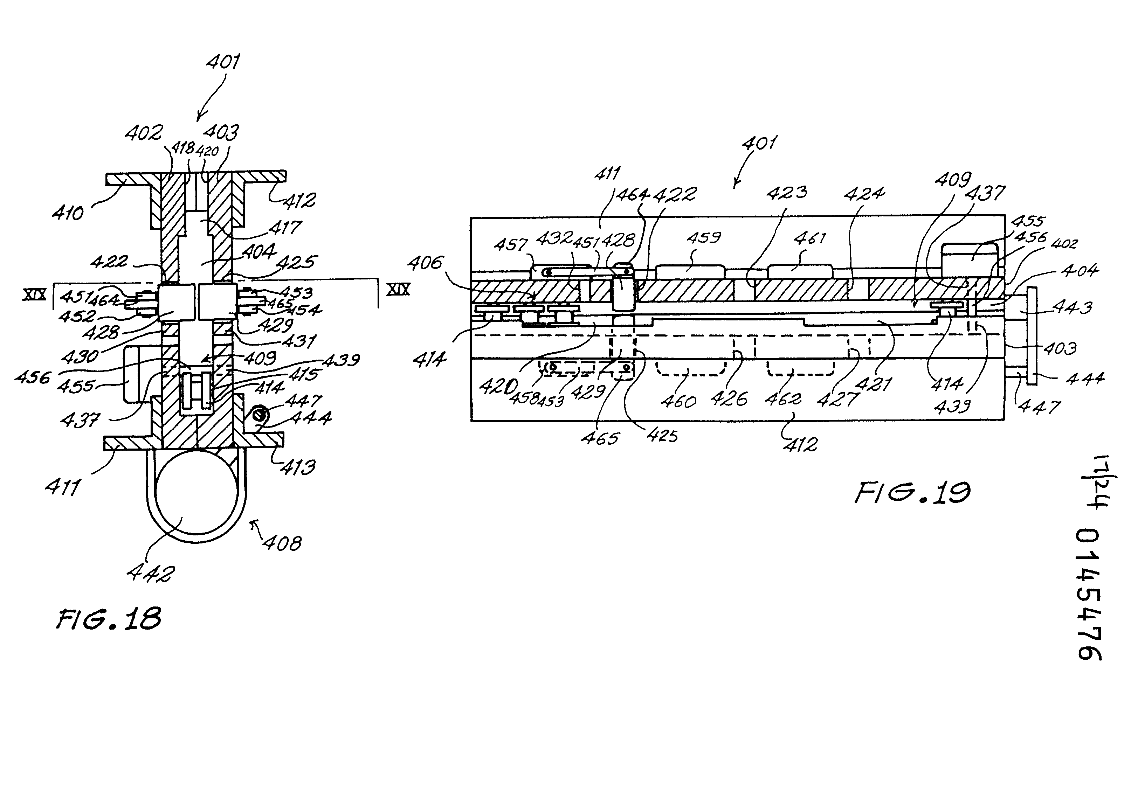

Support for the face of the ticket opposite to that engaged by the magnetic head may also be provided by a static surface, an arrangement which is in some respects similar to that shown in Figures 18 and 19, in particular, with the substitution of a member having a planar surface for one or other of the opposed magnetic heads and the member also extending over a longitudinal portion of the passage.

0145476

-86-

CLAIMS.

1.      Ticket handling apparatus comprising ticket transport means for moving a ticket (2; 232; 405; 673) from a ticket input station (25; 211; 406; 604) of the apparatus to a ticket output station (29; 212; 409; 605), the ticket being restrained during movement between the input and output stations against displacement in a direction substantially perpendicular to its own path of movement between said stations, and data transfer means (31, 35; 217, 218; 428, 429; 679, 680, 681) located between the input and output stations for transferring information to and/or from a ticket during movement of the ticket between the input and output stations, the data transfer means including at least one magnetic head (31; 217; 428; 679) for encoding data onto a region (57; 463) of magnetic material of the ticket and/or reading data previously coded onto said region, characterised in that the or each said magnetic head (31; 35; 217, 218; 428, 429; 679, 680, 681) is resiliently urged into data transfer relationship with the magnetic material of the ticket during movement of a ticket past said head.

2.      Ticket handling apparatus according to claim 1, wherein the or each magnetic head (31, 35; 217, 218; 679, 680, 681) enters into data transfer relationship with the magnetic material (57) from one side only of the general path of movement of the ticket between the input (25; 211; 604) and output (29; 212; 605) stations and the face of the ticket to the other side of its general path of movement is juxtaposed against a substantially planar surface (18; 231) of the apparatus during advance of the ticket between the input station and the output station of the apparatus.

3.     Ticket handling apparatus according to claim 1 or 2, wherein the ticket transport means includes a ticket drive member (4; 202; 445; 686) having a drive face (5; 203) for engaging an edge portion (55) of a ticket (2; 232; 405; 673) defined between opposed substantially planar surfaces of the ticket, the drive face (5; 203) being substantially transverse to the direction of movement of tickets between the input (25; 211; 406; 604) and output (29; 212; 409; 605) stations.

4.     Ticket handling apparatus according to claim 3, wherein the drive face (5, 203) is defined by a portion of the ticket drive member (4; 202; 686) extending substantially transverse to the direction of ticket advance from the input station (25; 211; 604) to the output station (29; 212; 605) for abuttingly engaging at least a portion of the rear edge (55) of a substantially rectangular ticket (2; 232; 673).

5.     Ticket handling apparatus according to claim 3 or 4, wherein the ticket drive member (4, 202; 686) is associated with a carriage (1; 201; 616), the carriage being translationally displaceable between the input (25; 211; 604) and output (29; 212; 605) stations and having a planar face (18; 231) against which one surface of a ticket (2; 232; 673) is juxtaposed during advance of the ticket from the input station to the output station, and said restraint against displacement of a ticket in a direction substantially perpendicular to its own path of movement between the input and output stations is provided by said planar face (18; 231) of the carriage (1; 201; 616) and an opposing fixed face of the apparatus, each ticket being located between said opposed faces during advance from the input station (25; 211; 604) to the output station (29; 212; 605).

6.     Ticket handling apparatus according to any of claims 3 to 5 for a ticket issuing machine, wherein a stack (234) of tickets (232) is accommodated in the apparatus, the leading ticket of a said stack being located at the input station (211) of the ticket handling apparatus, and the apparatus includes a stack retaining carriage (222) translationally displaceable between a restraining position in which it prevents the leading ticket of a said stack from being removed from the input station (211) and a clear position in which said leading ticket may be removed from the input station.

7. Ticket handling apparatus according to any of claims 3 to 5 for a ticket issuing machine, wherein the apparatus includes means (603) for advancing a leading end portion of a length of web material (672) to a ticket registration station (604) defining the input station of the apparatus so that a predetermined length (673) of the leading end portion of the web material, substantially defining a ticket, is disposed at the ticket registration station, and means (632) for detaching the ticket-defining predetermined length (673) at the registration station (604) from the remainder of the web (672), the ticket transport means (616) being disposed when at the registration station (604) to receive the leading end portion (673) of web material advanced to the station and being provided with means for holding a ticket-defining predetermined web material length (673) on the transport means (616) at least at the registration station.

8. Ticket handling apparatus according to claim 3, wherein the drive face is defined by a curved surface portion of the drive member (445) and a lateral edge (441) of each ticket (405) is guided during ticket advance from the input station (406) to the output station (409) to inhibit lateral displacement of the ticket within its own plane during said ticket advance.

9.     Ticket handling apparatus according to claim 8, wherein the drive member is a pin (445) having an axis extending substantially at right angles to the path of movement of a ticket through the apparatus and said drive face is defined by a curved surface portion of the periphery of said pin, and the lateral edge (441) of each ticket (405) is guided during ticket advance by a plurality of guide rollers (414) defining a notional surface over which the lateral edge of each ticket moves during advance through the apparatus.

10.     Ticket handling apparatus according to any preceding claim, wherein the ticket transport means includes an air motor for displacing a ticket (21) between the input (25) and output (29) stations.

FIG.1

FIG.2

2/24

0145476

0145476

FIG.3

0145476

FIG. 4

FIG.5

0145476

FIG. 7

FIG. 6

FIG. 8

7/24

0145476

FIG. 9

FIG. 10

FIG. 11

FIG. 12

FIG.13

FIG. 14

FIG. 15

FIG.16

FIG.17

FIG.18

FIG.19

17/24   0145476

FIG.20

FIG.21

18/24

0145476

FIG.22

FIG. 23

FIG. 24

FIG. 25

FIG. 26

0145476

22/24

FIG. 27

FIG. 28

FIG. 29

FIG. 30

FIG. 31

24/24

905

907

901

905

903

FIG. 32